Europäisches Patentamt

European Patent Office

Office européen des brevets

(19)

(11) **EP 1 263 236 A2**

(12) **EUROPEAN PATENT APPLICATION**

(43) Date of publication:
**04.12.2002 Bulletin 2002/49**

(51) Int Cl.$^7$: **H04N 7/26**

(21) Application number: **02291286.9**

(22) Date of filing: **27.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.05.2001 FR 0106933
26.10.2001 FR 0113922
18.09.2001 FR 0112064**

(71) Applicant: **Canon Research Centre France S.A.
35517 Cesson-Sevigne Cedex (FR)**

(72) Inventor: **Henry, Félix
35700 Rennes (FR)**

(74) Representative: **Rinuy, Santarelli
14, avenue de la Grande Armée,
B.P. 237
75822 Paris Cédex 17 (FR)**

(54) **Method and device for processing a digital signal**

(57)  The invention relates to a method of processing a digital signal comprising samples ($a_1$, $a_2$, ..., $a_9$) each represented by a coordinate on each axis of a coordinate system with n dimensions, where n is the dimension of said digital signal, characterized in that it comprises the following steps:

- determining among the coordinates of said samples the extreme coordinates (L, R, B, T) on each coordinate axis (x and y) of the coordinate system,
- for all the possible combinations between said samples taken in pairs, determining a minimum distance among all the distances calculated along each axis between, on the one hand, the coordinate of a first sample, and, on the other hand, the coordinate of each of the elements of the group comprising a second sample and copies of this second sample obtained by translation of said second sample in different directions and according to a value which depends on the extreme coordinates already determined.

Figure 10

**Description**

The present invention relates to a method of processing a digital signal comprising samples each represented by a coordinate on each axis of a coordinate system with n dimensions, where n is the dimension of said digital signal.

The invention applies in particular to the field of images.

The invention applies generally to the case of a digital signal which is not necessarily an image and which comprises a set of samples representing physical quantities.

Thus, the digital signals concerned by the invention may for example be video signals, audio signals, (music, speech, etc.), computer signals, signals output by a facsimile machine, multidimensional signals (multiband imagery), etc.

When it is desired to encode samples of a digital signal, and more particularly of an image, the conventional techniques of encoding are essentially based on the approach which consists in taking the samples forming the digital image in a predefined order, for example line by line and from left to right, and of encoding the amplitude of these samples.

The samples of the image signal concerned by the encoding may be pixels of said image signal.

Nevertheless, methods of decomposition of digital image signals are in widespread use today of the type where the decomposition is into frequency subbands.

The value of these methods derives from the aim of concentrating the maximum of information into a predetermined sub-band, in this case the sub-band of lowest frequency. This sub-band then contains coefficients which constitute a subset of the samples of the digital image, this subset preserving the essential characteristics of the digital image.

Thus the digital images may be, for example, decomposed into sub-bands and the amplitude of the coefficients of each of the sub-bands is then encoded.

In this case, the processing order of the digital samples is considered as implicit.

It should be noted that it may be chosen to encode only certain digital samples among all the pixels of the image or among all the coefficients of the sub-band of the decomposed image.

Furthermore, it may be desired to adopt an opposite approach to that already described on encoding samples of a digital signal, for example of an image.

More particularly, considering that the amplitude of the digital samples is implicit, i.e. that it conforms more or less to a predetermined model, a description of a path between the digital samples concerned of the signal will be sought, this path then being encoded.

In order for the encoding to be carried out with a minimum throughput, it is necessary for the description of the path between these samples to be as compact as possible.

If the digital samples of a bi-dimensional signal are represented for example by points in a Cartesian coordinate system comprising two axes of coordinates, it is then necessary for the path linking all these points to be the shortest possible to minimize the number of bits necessary for encoding.

In practice, the description of this minimum path involves the calculation of a distance between all the points taken in pairs, the definition of this distance being based on a vector linking two points.

In order for the path to be described between these points to be minimum, known solutions of the "traveling salesman problem" are relied on, this being a well-known problem in mathematics. According to this problem, a traveling salesman must pass through a certain number of towns in an order which minimizes the total distance.

In the case of interest here, solutions to this problem provide a minimum path joining the points or digital samples considered.

However, to solve this problem, the concept used of distance between two points must first be defined.

If $M_1$ and $M_2$ are two points with respective coordinates $(x_1, y_1)$ and $(x_2, y_2)$ in a Cartesian coordinate system, and V is the vector of displacement between $M_1$ and $M_2$ having the following coordinates:

$$vx = x_2 - x_1$$

$$vy = y_2 - y_1,$$

the distance d between the points $M_1$ and $M_2$, also called norm, is usually defined by one of the following three types:

$$d = \sqrt{vx^2 + vy^2}$$

or

$$d = max(|vx|, |vy|)$$

or,

$$d = |vx| + |vy|.$$

When the distance has been selected, the solutions mentioned above to the "traveling salesman problem" provide a list of vectors V between the different points to be passed through along the chosen minimum path.

With the chosen vectors having a norm of low value, it may be understood that the encoding of the chosen path is advantageous in terms of throughput.

Nevertheless, the applicant has realized that it would be worthwhile to find a new method and a new device making it possible to further reduce the number of bits necessary for the encoding of samples of a digital image.

On solving this problem, the applicant has found, in a surprising manner, a new method and a new device for processing a digital signal which provide, for each pair of samples, the smallest possible distance between those samples.

This new processing method and device serve more particularly as a basis for the creation of a new method and device making it possible to reduce the number of bits to be encoded in the signal.

However, in a more general manner, the new processing method and device found by the applicant may be used independently for other applications.

The object of the present invention is thus a method of processing a digital signal comprising samples $a_1$, $a_2$, ..., $a_9$ each represented by a coordinate on each axis of a coordinate system with n dimensions, where n is the dimension of said digital signal, characterized in that it comprises the following steps:

- determining among the coordinates of said samples the extreme coordinates L, R, B, T on each coordinate axis x, y of the coordinate system,
- for all the possible combinations between said samples taken in pairs, determining a minimum distance among all the distances calculated along each axis between, on the one hand, the coordinate of a first sample, and, on the other hand, the coordinate of each of the elements of the group comprising a second sample and copies of this second sample obtained by translation of said second sample in different directions and according to a value which depends on the extreme coordinates already determined.

In a complementary manner, the invention relates to a device for processing a digital signal comprising samples $a_1$, $a_2$, ..., $a_9$ each represented by a coordinate on each axis of a coordinate system with n dimensions, where n is the dimension of said digital signal, characterized in that it comprises:

- means for determining among the coordinates of said samples the extreme coordinates L, R, B, T on each coordinate axis x, y of the coordinate system,
- for all the possible combinations between said samples taken in pairs, means for determining a minimum distance among all the distances calculated along each axis between, on the one hand, the coordinate of a first sample, and, on the other hand, the coordinate of each of the elements of the group comprising a second sample and copies of this second sample obtained by translation of said second sample in different directions and according to a value which depends on the extreme coordinates already determined.

Thus, in other words a "frame" containing the samples considered is defined in the coordinate system, "copies" of this frame on each side of it are made by translation, adjacent to said frame, in different directions and the smallest possible distance is determined between a first sample of the frame and a second sample of said frame, as well as between this first sample and the "copies" of the second sample inside the respective copies of the frame.

In this way a new displacement vector W is defined for each pair of samples so processed and of which the norm is the smallest there is. The norm of the vectors W is in fact less than or equal to that of the displacement vectors V of the type described above.

According to one feature, the method comprises a step of determining a minimum path between the samples $a_1$, $a_4$, $a_6$, $a_7$, $a_8$, $a_5$, $a_2$, $a_3$, $a_9$ from the different minimum distances determined previously along each axis and for all the possible combinations of pairs of samples.

Having so determined new displacement vectors for each pair of samples considered, it is ensured that the minimum path obtained by applying a known solution of the "traveling salesman problem" to these new vectors will be less than or equal to that which would be obtained with the above-mentioned vectors V using the same solution.

A minimum path thus shortened results in vectors of reduced norm which are thus more advantageous to encode in terms of throughput.

It will be noted that the new displacement vectors W may be determined before the application of the above-mentioned solution of the "traveling salesman problem" or simultaneously with the implementation of that solution.

According to one feature, the value which depends on the extreme coordinates corresponds substantially to the difference L-R, R-L, B-T, T-B between the maximum coordinate L, B and the minimum coordinate R, T of the samples on each axis.

The translation is thus adapted to the dimensions of the set containing the samples in order to make the copies of samples outside a virtual "frame" delimiting that set.

According to one feature, the copies of the second sample are made in the two possible directions of each axis and of each diagonal.

According to one feature, the displacement vectors obtained from the consecutive samples of the minimum path are encoded.

These vectors are next transmitted with the order in which they appear in the minimum path in order to be able to position the different samples after decoding.

The invention also relates to a method of processing an encoded digital signal comprising a step of receiving this encoded digital signal, characterized in that said encoded digital signal comprises in encoded form:

- a coordinate of a so-called initial one of the samples of said non-encoded signal which was obtained along each axis of a coordinate system of n dimensions, where n is the dimension of said signal.
- the extreme coordinates L, R, B, T on each axis of the samples of said non-encoded signal,
- displacement vectors W which were each obtained before encoding of said signal from consecutive samples of a minimum path determined between the samples of the signal, as well as the order of these vectors in the path.

In a complementary manner, the invention relates to a device for processing an encoded digital signal comprising means for receiving this encoded digital signal, characterized in that said encoded digital signal comprises in encoded form:

- a coordinate of a so-called initial one of the samples of said non-encoded signal which was obtained along each axis of a coordinate system of n dimensions, where n is the dimension of said signal,
- the extreme coordinates L, R, B, T on each axis of the samples of said non-encoded signal,
- displacement vectors W which were each obtained before encoding of said signal from consecutive samples of a minimum path determined between the samples of the signal, as well as the order of these vectors in the path.

The digital signal received was encoded advantageously with respect to the throughput which makes the reception of the data so encoded more rapid.

After decoding of the data, the coordinates of each of the samples of the minimum path, along each axis, are reconstituted as a function of the new displacement vectors, of the extreme coordinates and of the coordinate of the initial sample.

This thus enables the image signal to be reconstructed in a manner just as reliable as if all the amplitudes of the samples had been transmitted or else as if more information had been transmitted by transmitting the displacement vectors V mentioned above.

According to one feature, the method comprises a step of determining the position of the coordinates reconstituted along each axis of each of the samples of the path with respect to the extreme coordinates of the samples.

The test carried out on the position of the reconstituted coordinates makes it possible to know whether that position is situated within the virtual "frame" enclosing the original samples or outside it.

According to one feature, when this position is outside the frame, i.e. when the determination step reveals that the position of a coordinate of a sample along an axis is situated beyond the extreme coordinates on that axis, said method comprises a step of adjusting the position of said coordinate.

More particularly, the adjusting step consists of carrying out a translation of the position of the coordinate along the axis considered and according to a value which depends on the extreme coordinates on said axis and on the position of the coordinate with respect to said extreme coordinates.

As previously stated, methods of decomposition are in widespread use today of the type where the decomposition is into frequency sub-bands.

When digital images are thus decomposed, the amplitude of the coefficients of each of the sub-bands is encoded.

Given the above, the Applicant's attention turned to a new method and a new device for processing a digital signal in which the amplitude of the samples would not be encoded.

The present invention thus also relates to a method of encoding a digital signal composed of a set of samples, with each sample there being associated an amplitude and at least one coordinate in a coordinate system, the method being characterized in that it comprises the steps of:

- classifying at least some of the samples according to a predetermined criterion,
- obtaining a curve representing the variation of the classified samples according to the predetermined criterion,
- encoding the data representing the curve obtained,
- encoding information representing at least one coordinate of at least one coefficient in an order obtained from the classification.

In a complementary manner, the invention also relates to a method of transmitting a digital signal which has been encoded according to the earlier encoding method, characterized in that the encoded data representing the curve obtained and the encoded information representing at least one coordinate are transmitted by means of a network.

The invention also concerns a method of decoding a digital signal comprising coefficients, the method being characterized in that it comprises the steps of:

- decoding information representing a curve of variation of the amplitude of the classified coefficients,
- decoding information representing at least one coordinate of the coefficients in a predetermined order and associating with the coefficients an amplitude obtained from the information representing the decoded curve and the order of the coefficients.

Thus, the amplitudes of the coefficients do not need to be encoded, so reducing the quantity of information to be transmitted.

According to a preferred embodiment the digital signal is divided into sub-parts beforehand and the classification of at least some of the samples is carried out among the samples of a sub-part.

This division of the digital signal into sub-parts makes it possible to process only some of the samples, and more particularly neighboring samples, thus making it possible to obtain curves representing the variation of the amplitudes of the samples having only little variation.

This division of the digital signal into sub-parts also enables only small quantities of samples to be processed at a time, and so reduces the size of the volatile memory of the processing device as well as its complexity.

In a complementary manner, the invention relates to a device for encoding a digital signal composed of a set of samples, with each sample there being associated an amplitude and at least one coordinate in a coordinate system, the device being characterized in that it comprises:

- means of classifying at least some of the samples according to a predetermined criterion,
- means of obtaining a curve representing the variation in the samples classified according to the predetermined criterion,
- means of encoding data representing the curve obtained,
- means of encoding information representing at least one coordinate of at least one coefficient in an order obtained from the classification.

The invention also relates to device for transmitting a digital signal which has been encoded according to the encoding method, characterized in that the encoded data representing the curve obtained and the encoded information representing at least one coordinate are transmitted via a network.

The invention also concerns a device for decoding a digital signal comprising coefficients, the device being characterized in that it comprises:

- means of decoding information representing a curve of variation of the amplitude of the coefficients classified,
- means of decoding information representing at least one coordinate of the coefficients in a predetermined order and of associating with the coefficients an amplitude obtained from information representing the decoded curve and the order of the coefficients.

In relation to another aspect, the JPEG2000 standard, whose description is available via the Internet network at the address http://www.jpeg.org, currently constitutes the benchmark method for encoding and decoding a digital image.

This method give satisfactory results in particular from the point of view of compression performances, i.e. the ratio between the quality of the restored image after decoding and the size of the compressed file.

However, these results can be improved on.

The object of the present invention is to provide a method and a device for digital signal encoding which enable compact encoding of the digital signal.

To that end, the invention provides a method of encoding a set of data representing physical quantities, the set of data comprising coefficients,

characterized in that it comprises the steps of:

- quantizing the coefficients using a predetermined set of quantization symbols,
- counting the number of coefficients associated with each of the quantization symbols,
- encoding the number of coefficients associated with each of the quantization symbols,
- determining the location of each of the coefficients associated with each of the quantization symbols, and
- encoding the locations of the coefficients.

The invention makes it possible to obtain good compression performances, i.e. a high ratio between the quality of the restored signal after decoding and the size of the compressed file.

Thus, for the same quality of image, the compressed file obtained according to the invention is smaller than that obtained by applying the JPEG2000 method. Reciprocally, for the same size of file, the image restored after decoding according to the invention has a better quality than that obtained by applying the JPEG2000 method.

According to a preferred feature, the locations of the coefficients are determined by:

- the coordinates of an initial coefficient in the set of data,
- displacement vectors for the other coefficients, the displacement vector of a coefficient being calculated from another coefficient associated with the same symbol.

The locations are thereby compactly encoded.

According to a preferred feature, the encoding of the locations of the coefficients comprises an entropic encoding of the displacement vectors.

This type of encoding is simple to implement and gives good performance.

Alternatively, according to a preferred feature, the locations of the coefficients are represented by their coordinates in the set of data.

The locations are then determined more simply than according to the first possibility.

According to a preferred feature, the encoding of the locations of the coefficients comprises an entropic encoding of the coordinates of the coefficients.

Here too, this type of encoding proves to have good performance.

According to a preferred feature, the set of data is a signal of the frequency sub-band resulting from a decomposition into sub-bands of an initial signal.

The decomposition of a signal into frequency sub-bands does not in itself create any compression, but enables the signal to be decorrelated in order to eliminate the redundancy prior to the actual compression. The sub-bands are thus encoded more efficiently than the original signal.

The invention also relates to a method of decoding a set of data representing physical quantities encoded by the encoding method already presented, characterized in that it comprises the steps of:

- decoding the number of coefficients associated with each of the quantization symbols,
- decoding the location of each of the coefficients associated with each of the quantization symbols,
- setting each of the coefficients to the value of the quantization symbol which corresponds to it.

The decoding method enables the image to be restored.

According to a preferred feature, the decoding of the location of a coefficient comprises the decoding of the displacement vector which corresponds to it.

Alternatively, according to a preferred feature, the decoding of the location of a coefficient comprises the decoding of its coordinates.

The decoding of the location of a coefficient of course depends on the manner in which this location was encoded.

In a complementary manner, the invention relates to a device for encoding a set of data representing physical quantities, the set of data comprising coefficients, characterized in that it comprises:

- means for quantizing the coefficients using a predetermined set of quantization symbols,
- means for counting the number of coefficients associated with each of the quantization symbols,
- means for encoding the number of coefficients associated with each of the quantization symbols,
- means for determining the location of each of the coefficients associated with each of the quantization symbols, and
- means for encoding the locations of the coefficients.

The encoding device comprises means for implementing the above features.

The invention also relates to a device for decoding a set of data representing physical quantities encoded by the encoding method already presented, characterized in that it comprises:

- means for decoding the number of coefficients associated with each of the quantization symbols,
- means for decoding the location of each of the coefficients associated with each of the quantization symbols,
- means for setting each of the coefficients to the value of the quantization symbol which corresponds to it.

The decoding device comprises means for implementing the above features.

The encoding device and the decoding method and device have similar advantages to those already set out.

The invention also relates to a digital apparatus including the devices according to the invention, or means for implementing the methods according to the invention. This digital apparatus is for example a digital camera, a digital camcorder, a scanner, a printer, a photocopier, or a fax machine. The advantages of the digital apparatus are identical to those already set out.

According to another aspect, the invention also relates to:

- an information storage means which can be read by a computer or a microprocessor containing code instructions for a computer program for executing the steps of the methods according to the invention, and
- an partially or entirely removable information storage means which can be read by a computer or a microprocessor comprising code instructions for a computer program for executing the steps of the methods according to the invention.

According to still another aspect, the invention relates to a computer program which can be directly loadable into a programmable device, comprising instructions or portions of code for implementing the steps of the methods according to the invention, when said computer program is executed on a programmable device.

Since the features and advantages relating to the information storage means and to the computer program are the same as those set out above relating to the methods according to the invention, they will not be repeated here.

Other features and advantages of the present invention will emerge more clearly from a reading of the following description, given with reference to the accompanying drawings, in which:

- Figure 1 represents samples of a bi-dimensional digital signal and their respective locations in a Cartesian coordinate system;

- Figure 2 is an example embodiment of a system showing, on the one hand, the processing, encoding and transmission of a digital signal of which the samples are shown in Figure 1, and, on the other hand, the decoding and processing of the digital signal decoded according to the invention, enabling the samples of the signal of Figure 1 to be reconstituted;
- Figure 3 is a view of a virtual frame C delimiting the samples of Figure 1;
- Figure 4 is a diagram of a displacement vector of known V type between two samples;
- Figure 5 is a diagrammatic view representing copies of the frame C of Figure 3 on each side of it, in the eight possible directions;
- Figure 6 shows a new displacement vector obtained between a sample $M_1$ and a copy $M'_2$ of a sample $M_2$ among the samples of Figure 1;
- Figure 7 and 8 represent the minimum path obtained and the associated displacement vectors between the samples of Figure 1 respectively with and without the invention;
- Figure 9 is an embodiment of a programmable device implementing the invention;
- Figure 10 is an algorithm for processing a digital signal to be encoded according to the invention, implemented in the device of Figure 9;
- Figure 11 is an algorithm for processing a digital signal encoded according to the invention, implemented in the device of Figure 9;
- Figure 12 is an example of an embodiment of an encoding-decoding system according to the invention;
- Figure 13 is an encoding algorithm according to the invention implemented in the device of Figure 12;
- Figure 14 is a decoding algorithm according to the invention implemented in the device of Figure 12;
- Figure 15 is a circuit for decomposition into frequency sub-bands included in the device of Figure 12;
- Figure 16a is a digital image to be encoded by the encoding device according to the present invention ;
- Figure 16b is an image decomposed into sub-bands by the circuit of Figure 15;
- Figure 17 is the image decomposed into sub-bands by the circuit of Figure 15, and partitioned into blocks;
- Figure 18 is an algorithm for approximation calculation of the variance of the coefficients classified;
- Figure 19 shows an encoding device according to the invention and a corresponding decoding device;
- Figure 20 is an embodiment of an encoding method according to the invention;
- Figure 21 is an embodiment of an decoding method according to the invention.

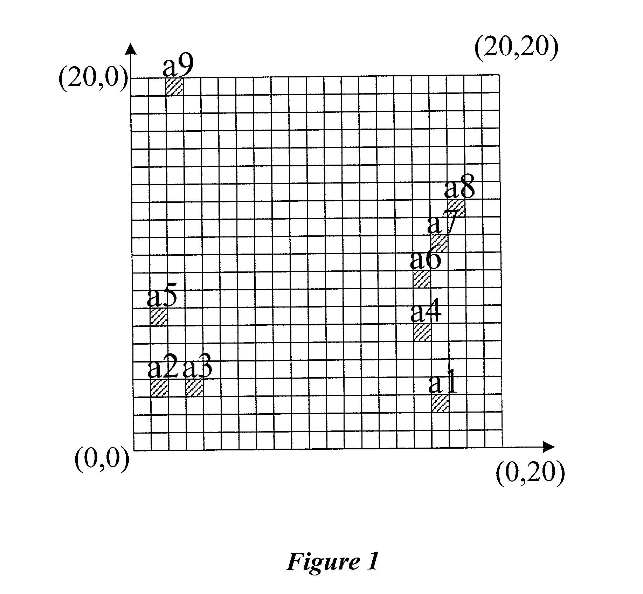

As shown in **Figure 1,** a bi-dimensional digital signal, such as an image signal, comprises several samples $a_1, a_2, a_3, a_4, a_5, a_6, a_7, a_8, a_9$ which are for example here pixels represented in a Cartesian coordinate system with x and y coordinate axes.

Generally, an image signal is a series of digital words, for example bytes. Each byte value represents a pixel of the image, here with 256 levels of gray or else in color.

The size of the image or of a subset of it represented in Figure 1 is 21 x21 pixels.

The pixels may thus have coordinates which range from the coordinates (0,0) at bottom left to the coordinates (20, 20) at top right.

The different samples form a set denoted G and are represented in cross-hatched squares, respectively situated at the following locations: $a_1 = (17, 2)$, $a_2 = (1, 3)$, $a_3 = (3, 3)$, $a_4 = (16, 6)$, $a_5 = (1, 7)$, $a_6 = (16, 9)$, $a_7 = (17, 11)$, $a_8 = (18, 13)$, et $a_9 = (2, 20)$.

It should be noted that the samples may alternatively be sub-band coefficients coming from one or more decompositions into frequency sub-bands of the image signal.

Such decomposition methods, for example of DWT (Discrete Wavelet Transform) type are widely known and used these days.

Instead of encoding the set of all the samples with their amplitudes and their coordinates, the present invention provides for defining, via new displacement vectors, a series of the positions of the samples of the set G and to encode it for the purposes of transmission, as will be seen below.

It will be noted that the digital signals concerned by the invention are not necessarily bi-dimensional since the invention applies for example to mono-dimensional signals such as audio signals or to tri-dimensional signals such as video signals.

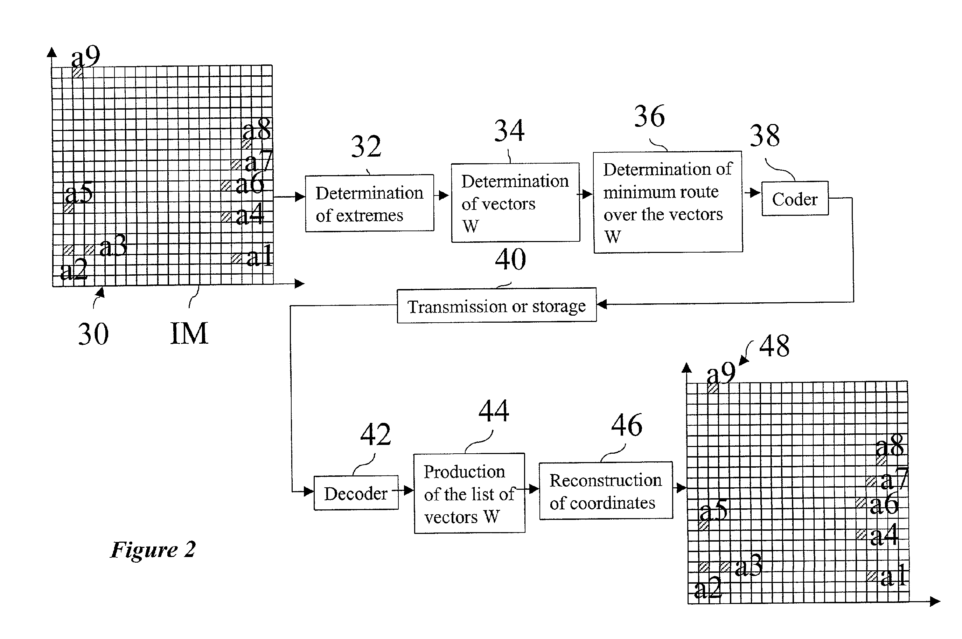

With reference to **Figure 2,** an embodiment of a processing device according to the invention is adapted process and to encode a digital signal with the object of compressing it. The processing device is integrated into an apparatus, which is for example a digital camera, a digital camcorder, a scanner, a printer, a photocopier, a fax machine, a system of database management, or a computer.

The device according to the invention comprises a signal source 30, which is an image signal IM here comprising the set G of samples of Figure 1. Generally, the source of the signal either contains the digital signal, and comprises for example a memory, a hard disk or a CD-ROM, or converts an analog signal into digital signal, and is for example an analog video camera associated with an analog to digital converter. The image source 30 generates a series of digital samples representing an image IM.

An output of the signal source 30 is connected to a circuit 32 for determining the coordinates L, R, B, T of the extremes of the signal on each axis of the coordinates x, y of the coordinate system.

Among the coordinates of all the samples of the set G, the extreme coordinates L, R, B, T are thus determined by seeking the coordinates of the minimum and the maximum that the signal reaches on each axis, i.e.:

L = min (x)      R = max (x)      B = min (y)      T = max (y). (x, y) $\in$ G      (x, y) $\in$ G      (x, y) $\in$ G      (x, y) $\in$ G

For the set G, the extreme coordinates are :
L = 1, R = 18, B = 2, T = 20.

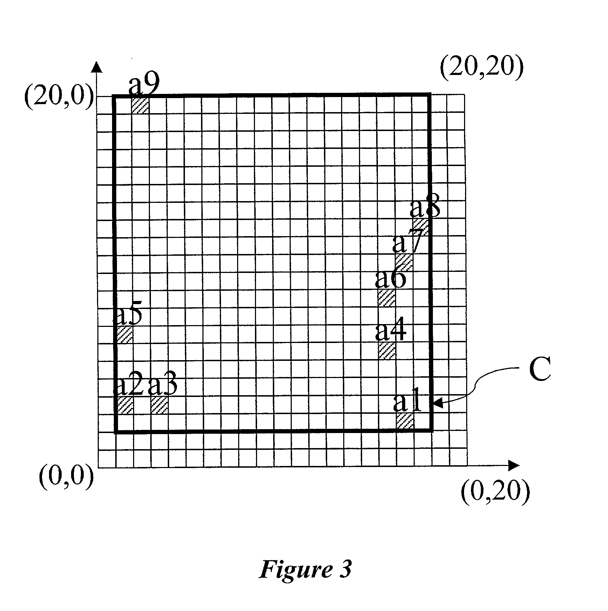

As shown in **Figure 3,** the determination of the extreme coordinates enables a virtual frame C to be defined which delimits as closely as possible the set G of the samples.

Returning to Figure 2, the output of circuit 32 is connected to a circuit 34 which will provide new displacement vectors W according to the invention.

To do this, the concept is defined beforehand of the distance to use for the calculation of the distance between two samples and, for example, the distance will be taken as distance d = max ($|x_2 - x_1|$, $|y_2 - y_1|$) between two points $M_1$ and $M_2$ of respective coordinates $x_1$, $y_1$ and $x_2$, $y_2$.

The determination of these new vectors requires all the samples of the set G to be processed in pairs.

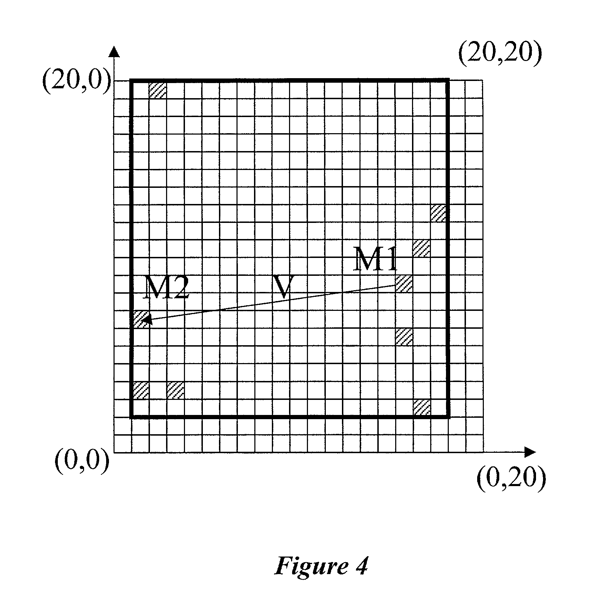

In the prior art, it was sought to calculate the distance between the two samples of the pair ($M_1$, $M_2$) in course of processing **(Figure 4).**

This distance associates a positive real number with the displacement vector V linking $M_1$ and $M_2$ and is also called the norm of vector V.

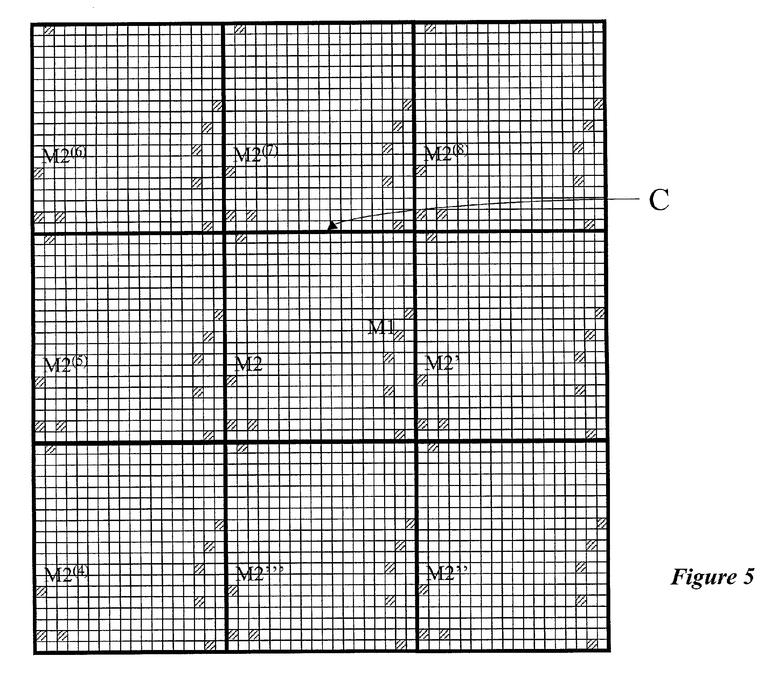

According to the invention, "copies" of the frame C of Figure 3 will firstly be considered which were made on each side of said frame in the eight possible directions, as shown in **Figure 5.**

In this manner, "copies" of the samples of the set G are made within the different "copies" of the frame.

The "copies" of samples are obtained by translation of a sample considered in the two possible directions for each coordinate axis, along the diagonals and according to a value which depends on the extreme coordinates determined by circuit 32.

For example, this translation value corresponds, for the x-axis, to the difference between the maximum coordinate R and the minimum coordinate L on that axis, which gives for the two possible directions the respective values R-L and L-R.

Similarly, on the y-axis the values T - B and B - T are found for the two directions.

Next, the invention provides for calculating, for a pair of samples in course of processing, such as that of Figure 4, all the distances between $M_1$ and each of the elements of the group comprising $M_2$ and the "copies" of $M_2$, i.e. M'$_2$, M"$_2$, M'''$_2$, $M_2^{(4)}$, $M_2^{(5)}$, $M_2^{(6)}$, $M_2^{(7)}$ and $M_2^{(8)}$ (Figure 5).

The smallest distance between all the distances calculated is then determined and the displacement vector W of coordinates wx, wy is thus obtained for the pair $M_1$, $M_2$.

It will be noted that the coordinates of the vector W are written:

$$wx = min (|x_2 - x_1|, |x_2 + L - R - x_1|, |x_2 - L + R - x_1|),$$

$$wy = min (|y_2 - y_1|, |y_2 + B - T - y_1|, |y_2 - B + T - y_1|),$$

where $x_1$, $y_1$ and $x_2$, $y_2$ are respectively the coordinates of $M_1$ and $M_2$.

It will be noted that the coordinates of the vector W supplied above make it possible to search for the sample to which the vector points or a copy of that sample among one of the nine "frames" of Figure 5.

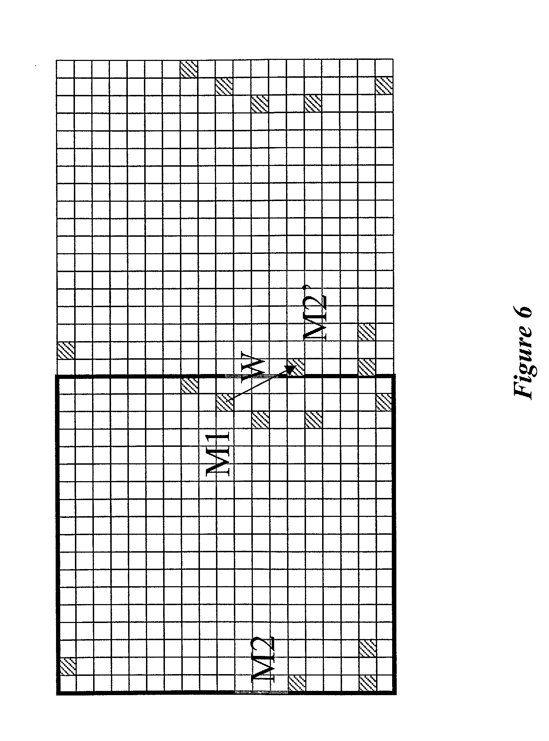

Thus, for the samples $M_1$, $M_2$, the new displacement vector W is represented in **Figure 6** and connects $M_1$ to a "copy" M'$_2$ of the sample $M_2$. The "copy" M'$_2$ is closer to $M_1$ than $M_2$ and all the other "copies" M"$_2$, M'''$_2$, $M_2^{(4)}$, $M_2^{(5)}$, $M_2^{(6)}$, $M_2^{(7)}$, $M_2^{(8)}$.

The vector W corresponds to a virtual displacement towards a new sample M'$_2$ which belongs to a "copy" of the signal, obtained by an offset (translation) of R - L to the right (axis for which x is positive).

In this manner, circuit 34 determines, for each pair of samples of the set G, a new displacement vector W.

These new displacement vectors could be used independently of the embodiment whose description will follow.

For example, when a mouse is used to move a cursor on a screen of large dimensions of a computer or other electronic apparatus, it is necessary to move the mouse over relatively long distances, which is not always easy given the support on which rests the mouse.

The new vectors W thus make it possible, for example, to reduce the displacements of the mouse by defining a faster path between the control buttons of the mouse on which the user must click.

It would thus be possible, by displacing the mouse in a single direction, to make the cursor leave the right side of the screen and to make it return virtually immediately on the left without needing to make it cross the whole screen and thus without needing to displace the mouse as a consequence.

Returning to Figure 2, the output of circuit 34 is connected to a circuit 36 which will apply to the minimum distances calculated previously one of the known solutions of the "traveling salesman problem".

Solutions of this problem may be found in the article of R.E. Burkard et AL, "Well-solvable special cases of the TSP: a survey", SPEZIAL FORSCHUNGSBEREICH F003, Bericht n° 52, Dec. 1995.

An example of a method is also given at the Internet address http://itp.nat.uni-magdeburg.de/~mertens/TSP/node2.html.

This method is called "method by insertion" and relies on the principle idea which is to first construct a path comprising a subset of the samples to be visited.

For example, three samples are chosen at random and connected in the only manner possible.

Next, for each sample not yet inserted, a calculation is made of which pairs of successive samples it will best be inserted between (i.e. by lengthening the path as little as possible ), and this represents the cost of that sample.

The sample of minimum cost is then inserted in the path. This procedure is reiterated until all the samples have been inserted.

A path of short length is thus obtained.

It should be noted that the path is not necessarily the shortest distance possible, but the solution obtained is nevertheless satisfactory.

It should be noted that no solution exists at the current time guaranteeing a calculation of minimum path when the number of samples is high, and for a reasonable calculation time.

Circuit 36 will thus make it possible to obtain a minimum path or route between the samples of the set G which is represented by a series of displacement vectors of new type and which are each, by definition, of reduced norm.

The vectors $W_i$, i = 1 to 8, are the following: (-1,4), (0,3), (1,2), (1,2), (1,-6), (0,-4), (2,0), (-1, -2).

A last vector (-1, 1) serves indicate the first sample of the path already identified and it is thus not necessary to take it into consideration during encoding.

The minimum path is written $a_1a_4a_6a_7a_8a_5a_2a_3a_9$ and its length is 26 for the distance used, whereas the minimum path obtained without the invention, with displacement vectors of V type, is written $a_1a_3a_2a_5a_9a_8a_7a_6a_4a_1$ and its length is 60.

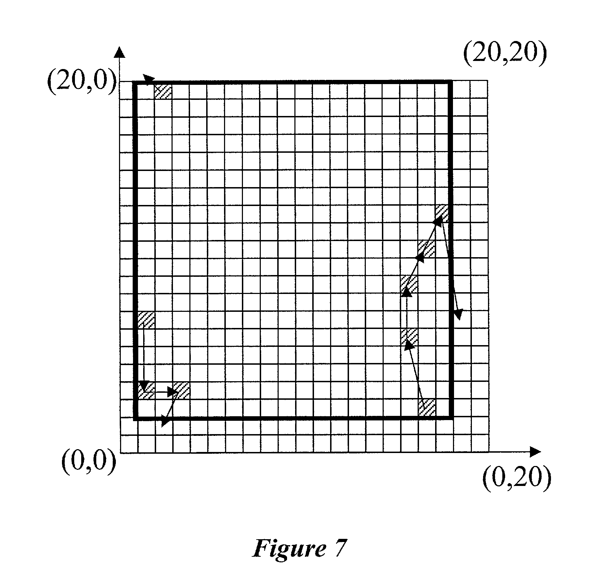

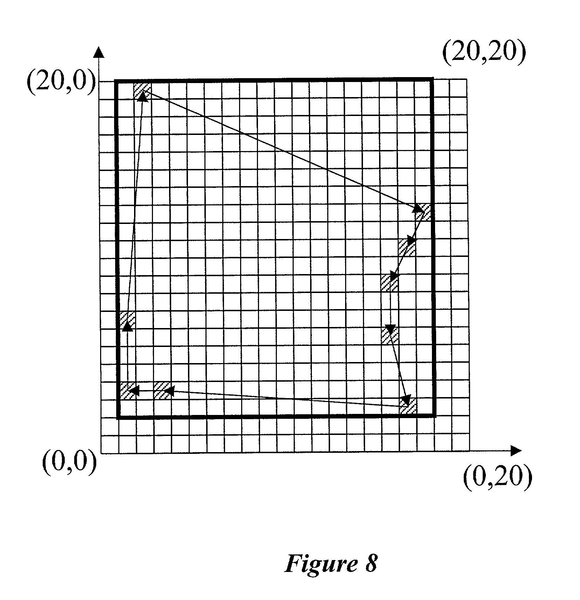

Figures 7 and 8 illustrate by the intermediary of displacement vectors the minimum paths obtained respectively with the invention and with the vectors of V type.

The invention thus enables a virtual path or route to be created in some way which a description will not be attempted but which will enable, by its compactness, to reduce the number of bits necessary for the encoding of the signal.

Although the determination of the short vectors of new W type (determination of a minimum distance between two samples and between a sample and "copies" of the other sample) has been presented as being independent of the operations carried out by circuit 36, it is possible to have a single circuit combining circuits 34 and 36.

In this single circuit, the determination of the vectors W is made simultaneously or virtually simultaneously with the solution of the "traveling salesman problem".

Returning to Figure 2, the output of circuit 36 is connected to an entropic encoding circuit 38.

Beforehand, an initial sample of the set G with its coordinates is selected, for example $a_1$, then is encoded by circuit 38.

This initial encoded sample will be transmitted to the processing device of the encoded digital signal and will serve as a starting point for determining the locations of the other samples of the set G in the coordinate system.

Circuit 38 also carries out the entropic encoding:

- of the extreme coordinates (L, R, B, T) of the set of the samples G and
- of the eight displacement vectors $W_i$, i = 1 à 8, determined by the circuits 34 and 36 and which describe the minimum path $a_1a_4a_6a_7a_8a_5a_2a_3a_9$ in an order established from the initial sample.

It is possible to directly encode the coordinates of each vector.

However, if it is desired to reduce the memory size of the data, it is preferable to encode the list of the vectors, for example using a Huffman encoding or an arithmetic encoding.

The encoding may also comprises a prior quantization step.

The new vectors of reduced norms will thus be encoded in a more economic manner than before.

The encoding circuit is connected to a circuit 40 in order to transmit to it a compressed file containing the signal of the encoded image, and, more particularly, in encoded form:

- the x and y coordinates of the initial sample $a_1$,
- the extreme coordinates (L, R, B, T) and
- the vectors $W_i$, where i = 1 to 8, with the order in which they appear in the path starting from the initial sample.

The circuit 40 stores and/or transmits the compressed file to a device for processing the encoded digital signal.

This processing device receives the encoded data then using them performs the reconstruction of the compressed image. It should be noted that if an entropic encoding and/or a decomposition into sub-bands have been carried out at the encoder, the decoding device will perform the inverse operations to those of the encoding circuit 38.

After reception of the encoded data constituting the encoded signal, they undergo a decoding operation in a decoding circuit 42.

The processing device then carries out, in a general manner, the reconstitution of the locations or positions of the different samples of the set G as a function of the extreme coordinates of said set, of the vectors $W_i$ and of the coordinates of the initial sample.

More particularly, the processing device comprises a circuit 44 which draws up the list of the displacement vectors $W_i$ as a function of the order of these vectors in the minimum path starting from the initial sample $a_1$.

The output of circuit 44 is connected to a circuit 46 for reconstitution of the coordinates of the different samples of the set G as a function of the extreme coordinates L, R, B, T, of the list of vectors $W_i$ and of the coordinates of the initial sample $a_1$.

The details of the operations carried out by this circuit will be dealt with later.

The circuit 46 is connected to a circuit 48 using the decoded data, for example to view the positions of the samples of the set G (decoded image).

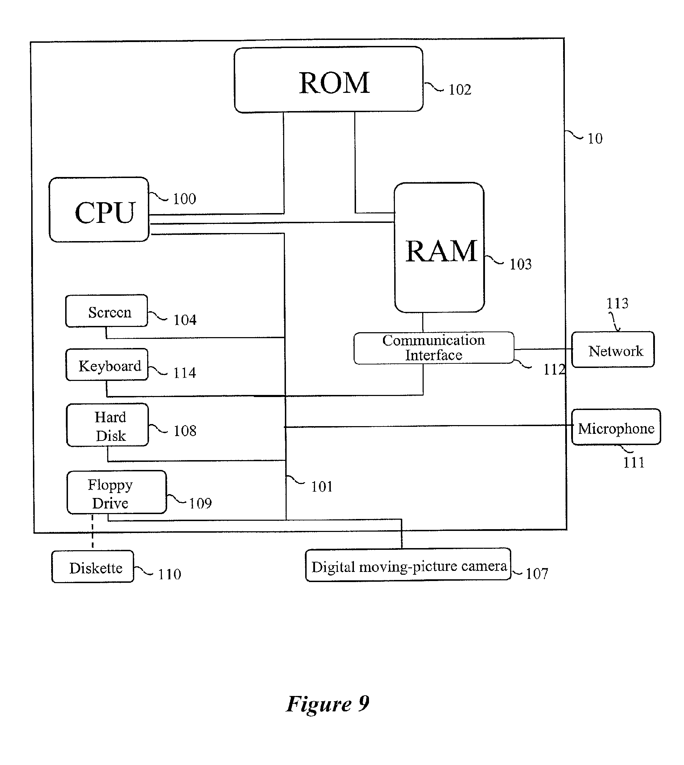

With reference to **Figure 9,** an example of a programmable data processing apparatus 100 implementing the invention is described. This apparatus is adapted to process a digital signal and in particular to encode it.

Furthermore, this apparatus is also adapted to process an encoded digital signal and in particular to decode it.

According to the chosen embodiment shown in Figure 9, the apparatus implementing the invention is for example a microcomputer 100 connected to different peripherals, for example a digital camera 101 (or a scanner, or any means of acquiring or storing an image) connected to a graphics card and supplying data to be encoded.

The apparatus 100 comprises a communication bus 102 to which there are connected:

- a central processing unit 103 denoted CPU (microprocessor),
- a read-only memory 104, comprising a program "Progr 1", for the processing and in particular the encoding of data and a program "Progr 2" for the processing and in particular the decoding of encoded data,
- a random access memory 106, comprising registers adapted to record variables modified during the execution of the aforementioned programs,
- a screen 108 for either displaying the data to be encoded or decoded as the case may be or serving as an interface with the user, who can parameterize certain modes of encoding or decoding, using a keyboard 110 or any other means, such as a mouse,
- a hard disk 112,
- a floppy drive 114 adapted to receive a diskette 116,
- an interface 118 for communicating with a communication network 120 able to transmit encoded digital data or to receive encoded data which are to be decoded by the device,
- an input/output card 122 connected to a microphone 124 (the data to be processed according to the invention in that case constitute an audio signal).

The communication bus affords communication between the different elements included in the microcomputer 100 or connected to it. The representation of the bus is non-limiting and, in particular, the central processing unit is able to communicate instructions to any element of the microcomputer 100 directly or by means of another element of the microcomputer 100.

The programs denoted "Progr 1" and "Progr 2" enabling the programmable apparatus to implement the invention, may be stored for example in read-only memory 104 (denoted ROM in the drawing), as shown in Figure 3. According to a first variant, the diskette 116, like the hard disk 112, may contain data that are encoded or to be encoded as well as the code of the invention which, once read by the apparatus 100, will be stored on the hard disk 112. In a second variant, the programs may be received in order to be stored in an identical fashion to that described previously via the communication network 120.

The diskettes can be replaced by any information carrier such as, for example, a CD-ROM or a memory card. In general terms, an information storage means which can be read by a computer or microprocessor, integrated or not into the apparatus, and which may possibly be removable, stores one or more programs implementing the processing method according to the invention

More generally, the programs may be loaded into one of the storage means of the apparatus 100 before being executed.

The central processing unit 103 will execute the instructions relating to the implementation of the invention, which are stored in the read only memory 104 or in the other storage means. On powering up, the programs which are stored in a non-volatile memory, for example the ROM 104, are transferred into the random access memory RAM 106, which will then contain the executable code of the invention, as well as registers for storing the variables necessary for implementing the invention.

The above-mentioned data processing apparatus 100 may also, in a non-limiting manner, be a digital camera, a digital moving picture camera, a camcorder, a television set, a video recorder, a fax machine, a server, a printer, etc.

It should be noted that the data processing apparatus comprising a device for processing a digital signal that is to be encoded or which is encoded according to the invention may also be a programmed apparatus.

This apparatus then contains the code of the computer program or programs for example fixed in an application specific integrated circuit (ASIC).

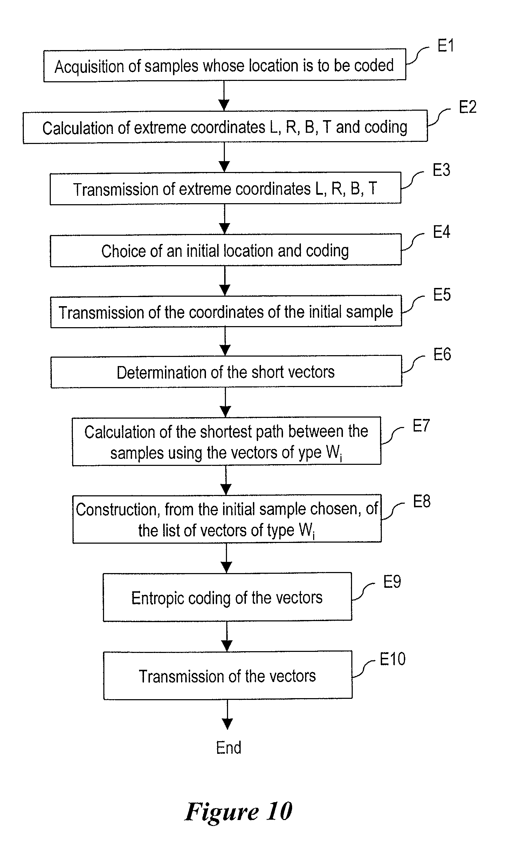

**Figure 10** shows an algorithm comprising different instructions or portions of code corresponding to steps of the method of processing a digital signal according to the invention.

The computer program denoted "Progr 1", which is based on this algorithm, is stored in the read only memory 104 of Figure 9 and, on initialization of the system, is transferred into the random access memory 106.

It is then executed by the central processing unit 103, which thus makes it possible to implement the method according to the invention in the device of Figure 9.

As shown in Figure 10, a first step of the algorithm, denoted S1, consists of acquiring the points or samples $a_1$, $a_2$, ... $a_9$ making up the set G and of which the location (positions represented in Figures 1 and 2) is to be encoded.

The algorithm of Figure 10 comprises a next step denoted S2 which performs a calculation of the extreme coordinates L, R, B and T among the coordinates of the samples of the set G, on each axis (x-axis and y-axis) of the coordinate system.

This calculation was described in detail in the description of circuit 32 of Figure 2.

During this step S2, an encoding of the extreme coordinates thus determined is also carried out.

The following step denoted S3 concerns the transmission of the extreme coordinates L, R, B, T which have been encoded.

It should be noted that, according to a variant, the extreme coordinates thus determined may be transmitted, once encoded, with other encoded data.

The algorithm of Figure 10 comprises a next step denoted S4 during which the choice of a so-called initial location is made, that is to say an initial sample of the set G and of its position represented by the coordinates in the x, y coordinate system.

This initial sample which was taken above equal to $a_1$, is the sample starting from which , at the device containing the decoder, the other locations or positions of the different samples of the set G will be reconstructed, by virtue of the invention.

During this step S4, an encoding of this initial sample is also carried out.

The following step S5 provides for the transmission of the coordinates of the encoded initial sample to the device containing the decoder.

Here too, this transmission step may be grouped together with the step of transmitting other data.

Similarly, the encoding operations planned for steps S2 and S4 may also be combined with the encoding of other data.

During the following step denoted S6, the determination is carried out of new short vectors according to the invention by processing the samples of the set G in pairs.

More precisely, for each pair of samples considered, the distance between these two samples is calculated as well as the distance between one of these samples, called the first sample, and each of the "copies" of the other sample called the second sample.

The copies of this second sample are obtained by translation of the second sample in different directions. for examnle in the two possible directions of each axis and of each diagonal, and according to a value which depends on the extreme coordinates determined at step S2.

More precisely, for each axis this last value corresponds substantially to the difference between the maximum coordinate and the minimum coordinate of the samples on the axis considered.

Thus, on the x-axis, two translations are proceeded with of a value equal to L - R and R - L for the two directions concerned, and, along the y-axis, two translations of a value corresponding to B - T and T - B in the two directions considered.

Once all the foregoing distances have been calculated, the least distance among them is determined and to this a new vector of type W with a reduced norm can thus be attributed.

This step is that which corresponds to the operations carried out by circuit 34 of Figure 2.

The algorithm of Figure 10 also comprises a step denoted S7 during which a minimum path is determined in known manner between the samples $a_1$, $a_2$, ... $a_9$ of the set G, using the short vectors already determined, that is to say the different minimum distances between the coordinates of the samples considered, along each axis and for all the possible combinations of pairs of samples.

As stated earlier in course of the operations carried out by circuit 36 of Figure 2, the minimum path between the samples is determined by using one of the known solutions of the traveling salesman mathematical problem.

Step S7 gives rise to the vectors of type $W_i$ where i = 1 to 8 and whose coordinates were given above.

These new vectors are shown in Figure 7.

During the following step denoted S8, the construction is carried out of the list of the vectors $W_i$ in the order in which they appear in the minimum path determined at step S7, and starting with the initial sample $a_1$ chosen previously.

This list of vectors W drawn up starting with the initial vector $a_1$ will be used at the decoder to reconstitute the different coordinates of the samples of the set G and thus position these samples at their respective locations.

The following step S9 corresponds to an entropic encoding of the vectors $W_i$ of the list already drawn up at step S8, as performed by the encoding circuit 38 of Figure 2.

Follow step S10 provides for the transmission of the vectors so encoded in the order in which they appear in the list drawn up at step S8, in order for them to be able to be appropriately used at the device containing the decoder.

This step ends the algorithm of the method of processing a digital signal according to the invention.

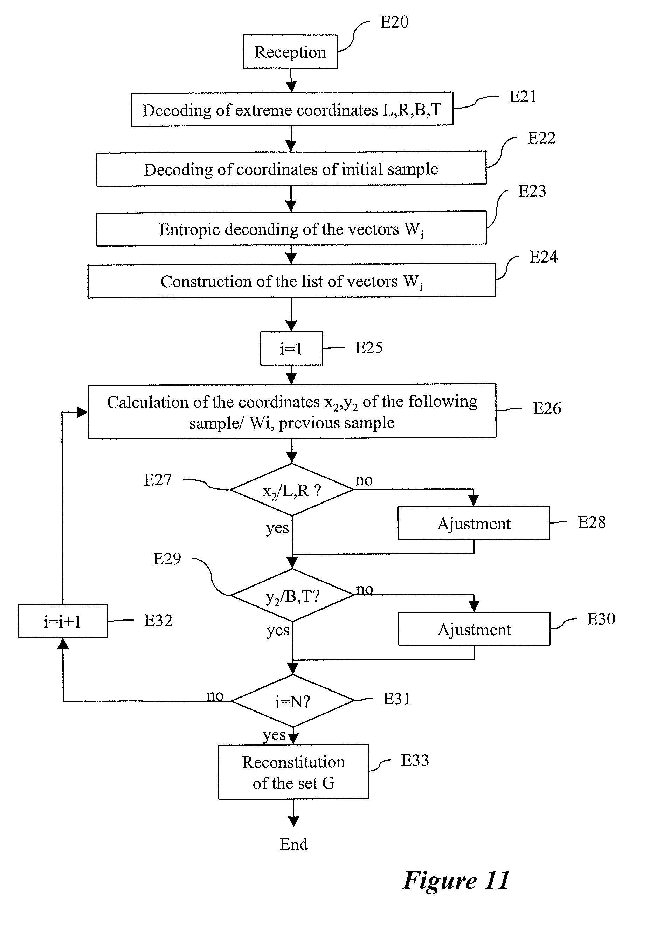

**Figure 11** shows an algorithm comprising different instructions or portions of code corresponding to steps of the method of processing the encoded digital signal according to the invention.

The computer program denoted "Progr 2", which is based on this algorithm, is stored in the read only memory 104 of Figure 9 and, on initialization of the system, is transferred into the random access memory 106.

It is then executed by the central processing unit 103, which thus makes it possible to implement the method according to the invention in the device of Figure 9.

As shown in Figure 11, the algorithm comprises a first step, denoted S10, of receiving the encoded data making up the digital signal encoded according to the algorithm of Figure 10.

During a following step denoted S21, a decoding is made of the extreme coordinates L, R, B, T which were determined and encoded at step S2 of the algorithm of Figure 10.

During the following step S22, a decoding is made of the coordinates of the initial sample $a_1$ selected at step S4 of the algorithm of Figure 10.

During the following step denoted S23, an entropic decoding is carried out of the vectors $W_i$ determined at step S6 of the algorithm of Figure 10.

During the following step denoted S24, the list is drawn up of the vectors $W_i$ in the order in which these vectors appear in the minimum path starting with the initial sample $a_1$, by virtue of the data transmitted by the device for processing the digital signal to be encoded.

During the following step denoted S25, the parameter i representing the vector $W_i$ concerned is set to 1.

During step S26, the calculation is made of the coordinates of the following sample based on, on the one hand, the preceding sample which is, here, the initial sample, and, on the other hand, the first vector $W_1$ of the list drawn up at step S24.

The coordinates of the vector $W_i$ considered will be denoted wx, wy and the coordinates of the preceding sample will be denoted $x_1$, $y_1$.

The coordinates $x_2$, $y_2$ of the following sample are written:

$$x_2 = x_1 + wx,$$

$$y_2 = y_1 + wy.$$

During the following step denoted S27, a test is performed on the position of the reconstituted coordinate $x_2$ along the x-axis of the following sample with respect to the extreme coordinates L and R.

Depending on whether $x_2$ is less than L or greater than R, this means that the situation shown in Figure 6 has occurred in which the following reconstituted sample falls outside of the frame C shown in Figure 3.

In this case, step S27 is followed by a step S28 during which the position is adjusted of the reconstituted coordinate along the x-axis, in an appropriate manner according to whether $x_2$ is less than L or greater than R.

Otherwise, when $x_2$ is both greater than L and less than R, this means that the sample whose position is reconstituted is actually within the frame C mentioned above.

The two cases which have just been described are summarized by the formulae below:

$$\text{If } x_1 + wx < L, \ x_2 = x_1 + wx + R - L$$

$$\text{If } x_1 + wx > R, \ x_2 = x_1 + wx - R + L$$

$$\text{If } R > x_1 + wx > L, \ x_2 = x_1 + wx$$

It is thereby understood that the adjustment step consists of performing a translation of the position of the coordinate along the x-axis according to a value which depends on the extreme coordinates on that axis.

More particularly, the value depending on the extreme coordinates corresponds to the difference R-L or L-R according to the position of the coordinate of the sample considered with respect to the extreme coordinates.

During a following step S29, a test is performed on the position of the reconstituted coordinate $y_2$ along the y-axis of the following sample with respect to the extreme coordinates T and B.

When the test carried out shows that the coordinate $y_2$ determined at step S26 is greater than T or less than B, then step S29 is followed by a step S30, during which an adjustment of the position of that reconstituted coordinate along the y-axis is made, in a manner adapted to the position of that coordinate with respect to the extreme coordinates T and B.

In fact, the results of the test mentioned above signifies that the reconstituted coordinate of the following sample is located outside the frame C illustrated in Figure 3.

Otherwise, when the reconstituted coordinate $y_2$ is less than T and greater than B, then the sample is one of the samples of the set G and not one of the "copies" of these samples which were made uniquely to improve the encoding in terms of througput.

The tests made on the coordinate $y_2$ to determine its position with respect to that of the extreme coordinates and the operations carried out during the adjustment step are summarized below:

$$\text{If } y_1 + wy > T, \ y_2 = y_1 + wy + B - T$$

$$\text{If } y_1 + wy < B, y_2 = y_1 + wy - B + T$$

$$\text{If } T > y_1 + wy > B, y_2 = y_1 + wx.$$

In a similar manner to that stated above concerning the adjustment step S28, according to the position of the coordinate $y_2$ with respect to the extreme coordinates B and T, a translation of that coordinate $y_2$ reconstituted at step S26 is carried out with a value B - T or T - B according to the case envisaged.

The algorithm of Figure 11 next comprises a step S31 during which a test is carried out on the value of the parameter i with respect to the value N identifying the last vector of the list of vectors $W_i$.

When the result of this test is negative, step S31 is followed by a step S32 during which the parameter i is incremented by one unit and step S26 already described is returned to.

Otherwise, when the result of the test carried out at step S31 is positive, a step S33 is proceeded to during which the results obtained during the preceding steps are brought together, so enabling the set G to be reconstituted as shown in Figure 2.

This step ends the algorithm of Figure 11 and the method of processing a digital signal according to the invention.

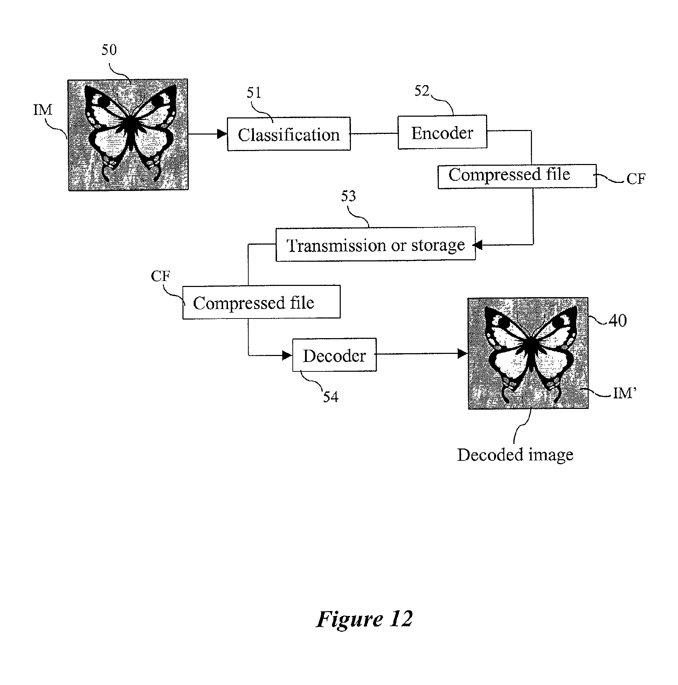

With reference to **Figure 12,** an embodiment of an encoding device according to the invention is adapted to encode a digital signal with the object of compressing it. The encoding device is integrated into an apparatus, which is for example a digital camera, a digital camcorder, a scanner, a printer, a photocopier, a fax machine, a system of database management, or a computer.

The device according to the invention comprises a signal source 50, in this case image signal IM which is either a fixed image or a sequence of images. Generally, the source of the signal either contains the digital signal, and comprises for example a memory, a hard disk or a CD-ROM, or converts an analog signal into digital signal, and is for example an analog video camera associated with an analog to digital converter. The image source 50 generates a series of digital samples representing an image IM. The image signal IM is a series of digital words, for example bytes. Each byte value represents a pixel of the image IM, here with 256 levels of gray or in color.

An output of the image source 50 is connected to a circuit 51 for classifying digital words or coefficients obtained by their decomposition into sub-bands by the circuit 51.

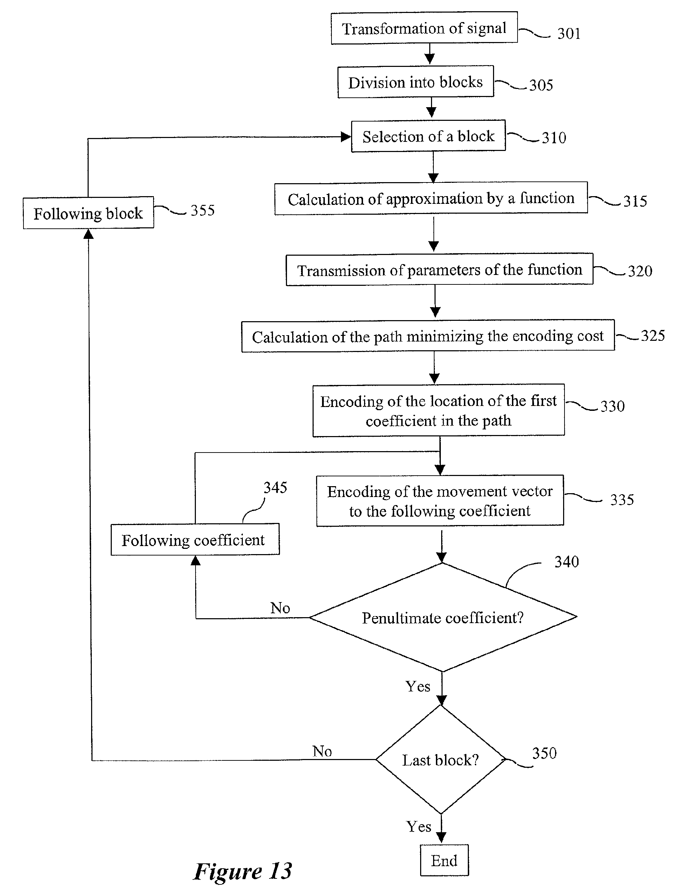

The circuit 51 enables a classification to be made according to a predefined increasing or decreasing order, the order not being, of course, absolute. It will be seen in what follows that certain compromises may exist in the classification. The operation of the circuit 51 will be detailed below with the help of the flow diagram of Figure 13.

The circuit 51 is connected to an encoding circuit 52, which will determine, as a function of the samples, a curve representing variations of the digital words or coefficients. The encoding will also associate with this curve information that represents at least one coordinate of the coefficients or digital words in the image. The encoding of the classified coordinates may also comprise a quantization and an entropic encoding such as an arithmetic encoding or a Huffman encoding. The curve as well as the classified coordinates form a set of encoded information.

The encoding circuit 52 is connected to a circuit 53 for processing of encoded data for transmitting to it the compressed file CF containing the encoded image. The circuit 53 stores and/or transmits the compressed file CF to a decoding device 54.

The decoding device 54 receives the encoded data then performs the reconstruction of the compressed image from the curve and the classified coordinates. It should be noted that if an entropic encoding and/or a decomposition into sub-bands have been carried out at the encoder, the decoding device will perform the inverse operations to those of the encoding circuit 52. The decoding circuit 54 is connected to a circuit 55 using the decoded data, for example to view a decoded image IM'.

With reference to **Figure 13,** the encoding method according to the invention will now be described.

The algorithm as described in Figure 13 is for example stored in the memory 104 of the device 100 of Figure 9 in order to be subsequently loaded into the memory 106 for its execution. The storage medium storing the algorithm is integrated or can be detachably mountable on th edevice 100. For example, the storage medium is a floppy disk or a CD-ROM.

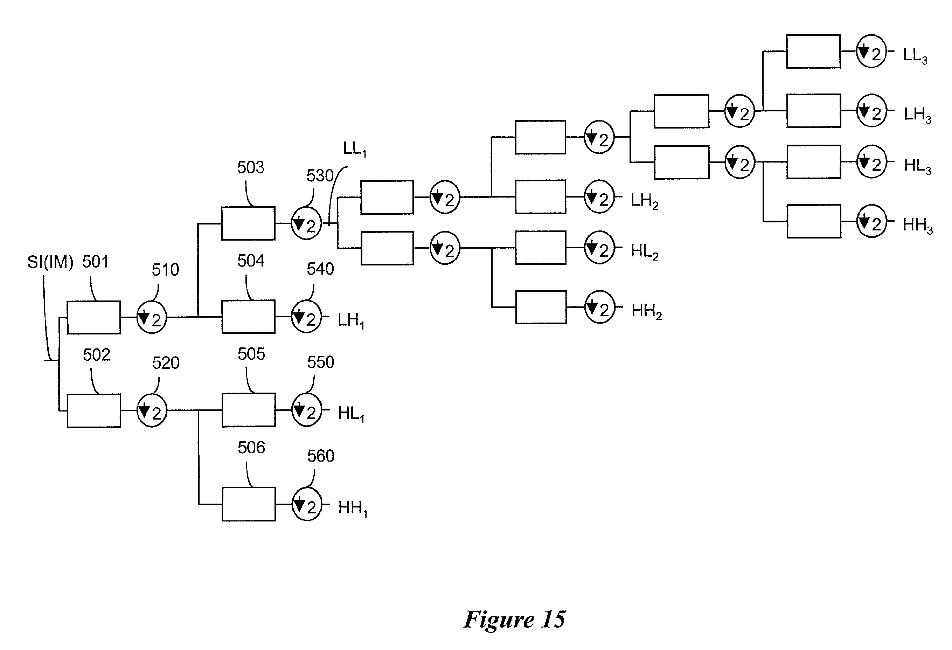

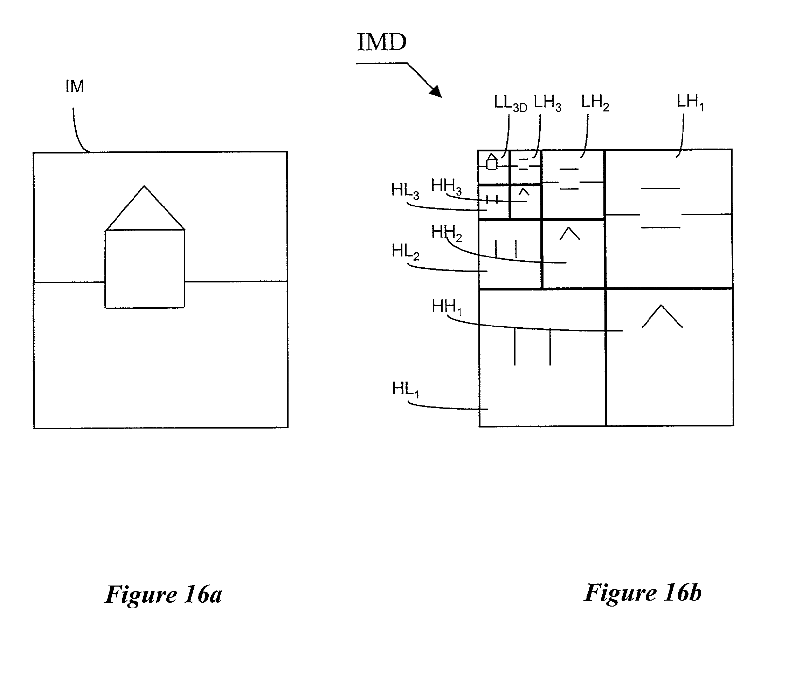

The digital image IM is decomposed at step 301 using preferably, but not limited to this, a decomposition into sub-bands as described with reference to Figures 15, 16a and 16b.

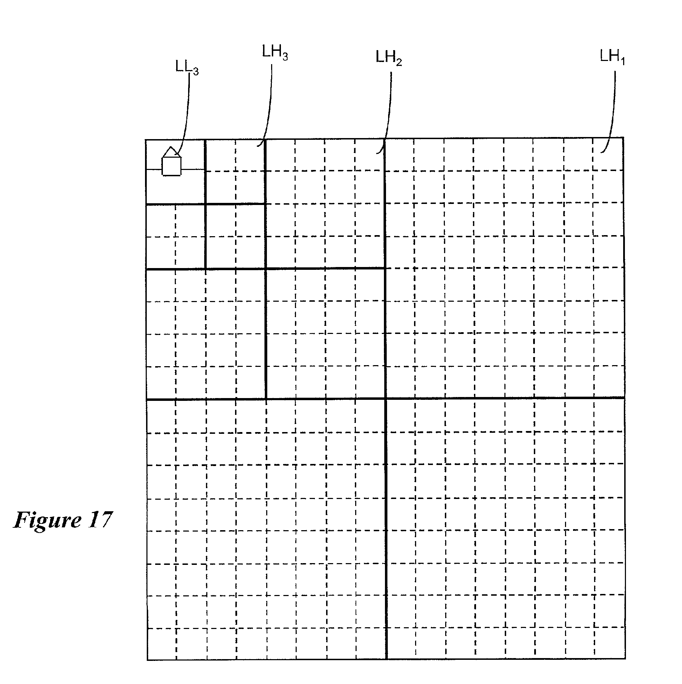

The coefficients thus obtained are next, at step 305, divided into blocks. This division into blocks having been performed, the central processing unit 103 of the device 100 of Figure 9 will, at step 310, take a first block and process it independently of the other blocks. The central processing unit will take the blocks for example in the following manner: the first being the block situated at the upper left of Figure 17, the second being that which is at the top to the right of the first and so on.

In variant form, the processing by block will be carried out sub-band by sub-band following an order similar to that already described.

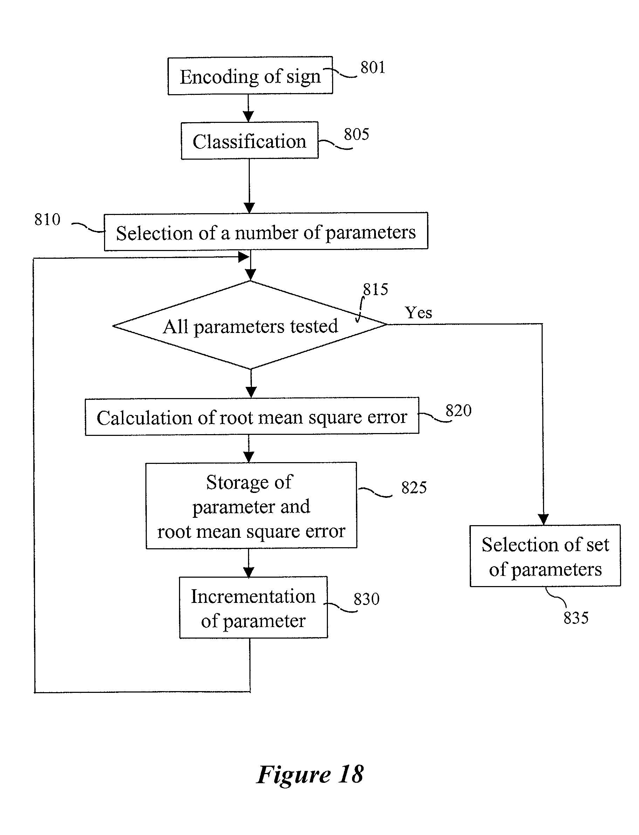

This operation achieved, at step 315 the central processing unit will carry out the calculation of approximation of the coefficients contained in the block by a function. This calculation divides up into different sub-parts described with reference to **Figure 18.**

A first step 801 of Figure 18 will consist in an encoding of the sign of the coefficients. The coefficients being of real value, the sign information will first of all be encoded independently, by transmitting for example a binary value at 0 for a plus sign and at 1 for a minus sign.

Other methods of sign encoding are possible such as those mentioned in the JPEG 2000 standard mentioned above.

This operation achieved, and the coefficients then being considered as absolute values and thus all being positive, step 805 will consist in classifying the coefficients of the block from largest to smallest.

In a variant form, a threshold value S1 could be fixed, below which the coefficients are considered as not significant. Putting in order will then be carried out as far as the last coefficient of value greater or equal to S1, the coefficients considered as not significant are not processed.

It should be noted that other variants are possible, for example from the smallest to the largest.

In what follows it will be assumed that P coefficients are classified (that is to say that P coefficients have a value greater than or equal to S1).

This operation having been achieved, the central processing unit 103 goes on to the step 810 which will choose, from the series of P coefficients arranged from the greatest to the least and named by the series $x_1$, $x_2$, $x_3$,... ,$x_P$, a set A comprising a finite number of R parameters $a_1$, $a_2$,..., $a_R$. For example, a decreasing exponential family could be chosen, written $f_A(x)=a_1.\exp(a_3.x+a_4)a_2$.

At steps 815, 820, 825 and 830 the method will determine among a family of real functions that which reproduces as accurately as possible the evolution of the values of the $x_i$ as a function of their rank $i$.

At these steps, the parameters $a_1$, $a_2$, $a_3$, and $a_4$ will be determined such that the function $f_A$ is the closest possible to the points $(1, x_1)$, $(2, x_2)$,....,$(P, x_P)$. This typical problem is called function regression. Numerous techniques exist for finding the best set of parameters. For example minimization of the root mean square error RMSE could be sought, equal to

$$RMSE = \frac{1}{P}\sqrt{\sum_{i=1}^{P}(x_i - f_A(i))^2} \ .$$

To achieve this, it could be chosen to quantize each parameter $a_i$ (step 830) into a finite number of possible values. There are then a finite number of different values of parameters of A. The RMSE value is then calculated at the step 820 for each set of parameters and is then stored with the value of the parameters associated at step 825. When all the parameters have been incremented (step 815), the central processing unit will, at step 835, choose the set which minimizes RMSE from among the parameters stored at step 815 and stocked in the memory 106.

Other faster methods are described in D. Mohda et AL, "Minimum complexity regression estimation with weakly dependent observations", IEEE Transactions on Information Theory, Nov. 96.

Let Aopt be the name of the set of parameters which minimize RMSE.

This operation achieved, the central processing unit then goes on to the step 320 of Figure 13 and will encode the parameters of Aopt in order to store them in a file representing the encoded image, or transmit them to an addressee via the communication network 120.

At step 325, the central processing unit will calculate the path which minimizes the cost of encoding, that is to say find the path linking Q elements of the set $\{x_1,...,x_P\}$ such that the cost of encoding of this path is minimum. A measurement of encoding cost is thus made available.

In typical manner, this measurement is expressed, for a given signal, in the form $B+\lambda.D$, where $B$ is the rate associated with the signal, D is the distortion with respect to the original after decoding of the signal, and $\lambda$ is a parameter fixed by the encoder or the user of the encoder.

The parameter $\lambda$ determines the balance between compression and quality. The distortion is a simple measurement to calculate. This is because, when the decoder receives the information about the localization of the $k^{th}$ coefficient, the decoding value will be $f_A(k)$.

Thus, at the encoder, when the $k^{th}$ sample is in course of being encoded, the distortion is measured between the value of this sample and $f_A(k)$.

The rate is also simple to measure since we have an entropic code which is associated with each displacement vector. The number of bits necessary for the encoding of a vector can thus be obtained directly.

This type of problem is well known in combinatorics. It is known as the traveling salesman problem, in which a certain number of towns have to be gone through in an order which minimizes the total distance. In this case, our problem is a particular instance called the time-dependent traveling salesman problem.

Indeed, the cost associated with the passage from one sample to another depends on the path already followed, since the decoding distortion of a sample depends on the rank at which it will be decoded.

The solution of this type of problem is found by use of an evolutionary algorithm. An example of such a method can be found in X. Wang et AL, "The traveling salesman problem with separation requirements: an examination of alternative formulations", or else in R. Burkard et AL, "Well-solvable special cases of the TSP : a survey", these two references being available at the Internet address http://citeseer.nj.nec.com/cs.

Once the optimum path in terms of rate-distortion has been obtained, the central processing unit goes on to step 330 which consists of encoding the first coefficient.

It should be noted that it is necessary to encode the first coefficient transmitted in a different manner to the others. In order to simplify the encoding of this coefficient, one could for example arbitrarily encode its location using a vector of displacement with respect to the point of coordinates (16, 16), that is to say the center of the block.

Next, for all the other coefficients except the last, the central processing unit will encode the displacement vector at step 335.

At this step, there are transmitted the coordinates of the vector of displacement from the coordinates of the previously encoded coefficient.

Displacement vector is understood to mean the vector of which the coordinates are the differences between the coordinates of the second point and of the first. It should be noted that in theory this solution may seem less beneficial than a conventional solution in which the position of the coefficients would be directly encoded since a difference over 32 coefficients is encoded over 6 bits instead of 5 (from -31 to +32). Nevertheless, the nature of the signal is such that in general, the coefficients of high amplitude are found to be accumulated in the same place in a sub-band. It is therefore worthwhile to encode the points with reference to each other, such that the displacement vectors remain very small on average.

Thus, by applying an entropic encoding to these vectors, it will be possible to obtain a code that is more compact.

For as long as all the vectors have not been encoded, steps 335 to 345 will be reiterated.

Once all the coefficients have been encoded, the central processing unit goes on to the following step 350, which consists in verifying is all the blocks have been processed.

If they have not, at step 355 the central processing unit will take the following block from the RAM memory and reiterate the steps 310 to 355.

If they have, the central processing unit has terminated the encoding method, and the encoded information is then stored or transmitted via the communication network 120.

In variant form, the encoding of the coefficients may be carried out in the following manner. By taking for example a block of size 32x32 coefficients, all that is required is 5 bits for encoding each coordinate, in relation to the x and y axes.

From a parameter Q less than or equal to P, the coordinates of the $x_i$ are transmitted or stored in the order $x_1, x_2, x_3,...$ until $x_Q$.

By modifying the value of the parameter Q, it would be possible to vary the compression rate and the quality of the image to be compressed. The more Q is small, the more the image will be compressed, but the higher will be the degradation of the reconstituted signal.

All the blocks of all the sub-bands are encoded in this manner.

According to another variant form, instead of encoding the coordinates over 5 bits it is also possible to use an entropic encoding such as a Huffman encoding or an arithmetic encoding.

According to a further variant, the encoding is identical to that already set out in steps 301 to 355 except that no variation of the rate distortion parameter is implemented.

According to another variant form, the sign encoding is not necessary and for example the encoding as already described will only be carried out on the positive coefficients then independently on the absolute value of the negative coefficients.

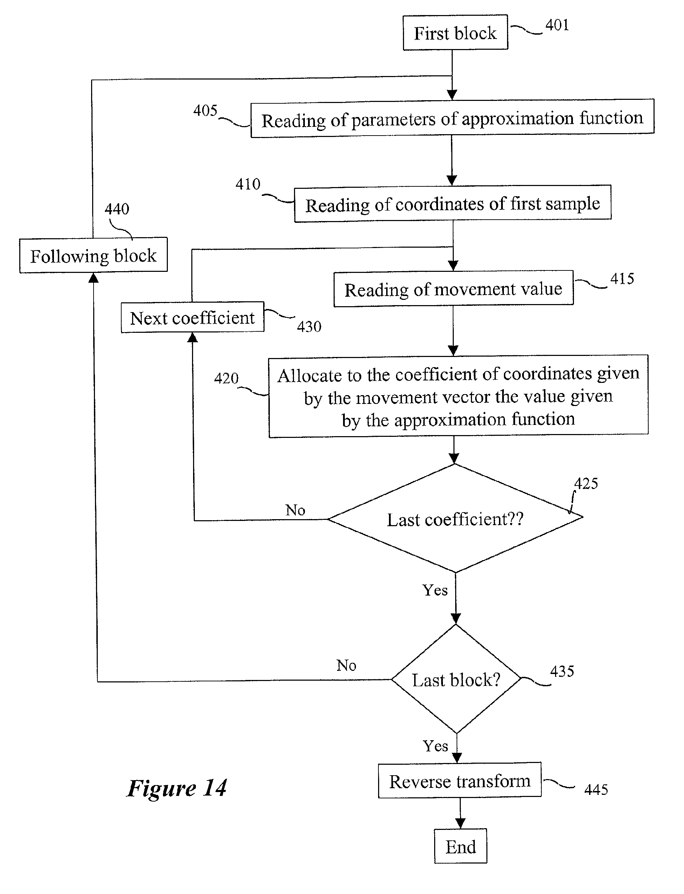

With reference to **Figure 14,** the method of decoding conforming to the method of encoding previously set out will now be described.

The decoding algorithm is stored in the non-volatile memory 104 or the hard disk 112 of the device 100 of Figure 9 and is loaded by the central processing unit 103 into the random access memory 106 of the same device. The storage medium storing the algorithm is integrated or can be detachably mountable on th edevice 100. For example, the storage medium is a floppy disk or a CD-ROM.

The algorithm comprises 10 steps numbered 401 to 445. The decoding device constituted by the device 100 containing the decoding algorithm receives the information to be decoded via the communication network 120, or will read the encoded information from one of its storage means.

At step 401, the central processing unit will read the first block to be decoded. It should be noted that the encoder and the decoder use the same block division.

In the same manner as for the encoding, the blocks will be processed independently from each other in a sequential manner, in the same order as for the encoding, but it may also be carried out in a parallel manner.

At step 405 the central processing unit 103 will read the parameters of the approximation function associated with the block to be processed and decode them if necessary.

It should be noted that the decoder uses the same family of functions as the encoder.

The following step 410 will consist of reading and decoding the first sample of the block, then reading the displacement vector if the encoding has encoded the information in vector form.

Once this operation has been accomplished, the central processing unit will attribute, to the coordinate coefficient obtained by the displacement vector, the value of the amplitude given by the position of the coefficient by virtue of the approximation function reconstituted from its parameters. The decoding of the sign information will also be carried out so as to be able to attribute its sign to each coefficient decoded.

This is performed at step 420. It should be noted that if the encoding had been carried out without displacement vectors but in a simpler manner by encoding the position of the coefficient in the block, the calculation of the coordinate of the coefficient from the vector would not be necessary.

The following step 425 consists of a test aiming to determine whether the last coefficient of the block in course of being processed has been decoded.

If so, the central processing unit goes on to step 435 which will determine whether the last block has been processed.

If not, the central processing unit will go on to the following coefficient at step 430 and steps 415, 420, 425, and 430 will be reiterated so long as the last coefficient of the block has not been processed.

If the test at step 435 is negative, at step 440 the central processing unit will read the following block in the same manner as at step 401 and reiterate the steps 405 to 435.

If the last block has been processed, at step 435 the central processing unit will go on to the calculation of the transform that is inverse to that executed at the encoding, for example an inverse transform of the decomposition into sub-bands.

Once this step has been accomplished, the method of decoding is terminated for the image to be decoded.

According to a variant form, the coordinates (p, q) of the first sample are read in the file. The coefficient of the coordinates (p, q) is then set to the value $f_{Aopt}(1)$ (taking into account the sign). Next the coordinates of the second sample are read, and at these coordinates the sample is set to the value $f_{Aopt}(2)$ (taking account of its sign), and so on as far as the last sample encoded for this block.

According to another variant form, the block coefficients which have not been allocated a value at the previous steps are allocated arbitrary values chosen by the decoder. In the preferred embodiment, these values will be set at zero.

According to **Figure 15**, the method of decomposition into sub-bands which may be contained in circuit 51 of Figure 12 comprises three successive analysis units for decomposing the image IM into sub-bands according to three levels of resolution.

In general terms, the resolution of a signal is the number of samples per unit length used for representing this signal.

The first analysis unit receives the digital image signal and applies it to two digital filters 501 and 502 which are respectively low-pass and high-pass which filter the image signal in a first direction, for example horizontal in the case of an image signal. After passing through decimators by two 510 and 520, the resulting filtered signals are respectively applied to two low-pass filters 503 and 505, and high-pass filters 504 and 506, which filter them in a second direction, for example vertical in the case of an image signal. Each resulting filtered signal passes through a respective decimator by two 530, 540, 550 and 560. The first unit outputs four sub-bands $LL_1$, $LH_1$, $HL_1$ and $HH_1$ of the highest resolution $RES_1$ in the decomposition.

The sub-band $LL_1$ comprises the components, or coefficients, of low frequency, in both directions, of the image signal. The sub-band $LH_1$ comprises the components of low frequency in a first direction and of high frequency in a second direction, of the image signal. The sub-band $HL_1$ comprises the components of high frequency in the first direction and the components of low frequency in the second direction. Finally, the sub-band $HH_1$ comprises the components of high frequency in both directions.

Each sub-band is an image constructed from the original image, which contains information corresponding to a respectively vertical, horizontal and diagonal orientation of the image, in a given frequency band.

The sub-band $LL_1$ is analyzed by an analysis unit similar to the previous one in order to supply four sub-band signals $LL_2$, $LH_2$, $HL_2$ and $HH_2$ of intermediate resolution level $RES_2$ in the decomposition. The sub-band $LL_2$ comprises the low frequency components in the two directions of analysis, and is analyzed in its turn by the third analysis unit which is similar to the two previous ones. The third analysis unit supplies the sub-bands $LL_3$, $LH_3$, $HL_3$ and $HH_3$, of the lowest resolution level $RES_3$ in the decomposition, resulting from the division into sub-bands of the sub-band $LL_2$.

Each of the sub-bands of resolution $RES_2$ and $RES_3$ also corresponds to an orientation in the image.

The decomposition carried out is such that a sub-band of given resolution is divided into four sub-bands of lower resolution and thus has four times more coefficients than each of the sub-bands of lower resolution.

A digital image IM is represented in a schematic manner in **Figure 16a,** whereas **Figure 16b** represents the image IMD resulting from the decomposition of the image IM, into ten sub-bands according to three resolution levels. The image IMD comprises as much information as the original image IM, but the information is divided in frequency according to three resolution levels.

The lowest resolution level $RES_3$ comprises the sub-bands $LL_3$, $HL_3$, $LH_3$ and $HH_3$, that is to say the sub-bands of low frequency in the two directions of analysis. The second resolution level $RES_2$ comprises the sub-bands $HL_2$, $LH_2$ and $HH_2$ and the highest resolution level $RES_1$ comprises the sub-bands $HL_1$, $LH_1$ and $HH_1$ of highest frequency.

The sub-band $LL_3$ of lowest frequency is a reduction of the original image. The other sub-bands are detail sub-bands.

Naturally, the number of resolution levels, and consequently of sub-bands, can be chosen differently, for example 13 sub-bands and four resolution levels, for a bi-dimensional signal such as an image. The number of sub-bands per resolution level can also be different. The analysis and synthesis circuits are adapted to the dimension of the signal processed.

For fuller information on the transform into sub-bands also called transform into wavelets reference may be made to the publication of S. Mallat, "A theory for multiresolution signal decomposition: the wavelet representation" or else to the public encoding standard JPEG2000 of which the description is available at the Internet address http://www.jpeg.org.

According to a variant form, it is also possible to use the discrete cosine transform (DCT), the Fourier transform, or a non-linear transform such as a morphological transform (ref: H. Heijmans et AL, "Multiresolution signal decomposition schemes: part 2, Morphological wavelets" IEEE Transactions on Image Processing, Nov. 2000 ). The invention is efficient with or without decomposition or transformation.

It should be noted that according to a variant of the invention, the low sub-band $LL_3$ could, due to its different nature, be encoded with a linear prediction (DPCM).

The image decomposed into sub-bands is next partitioned into blocks as shown in **Figure 17.** This partition is for example carried out by the circuit 51 of Figure 12. Each detail sub-band is divided into blocks. In a preferred embodiment the blocks will be square and of size 32x32 sub-band coefficients, arranged so as to create a partition of each sub-band. However, other divisions into blocks are possible: blocks of any form such as rectangles, circles, non-contiguous groups of pixels, overlapping or not, and may be of different size according to the decomposition level.

Naturally the partitioning will be identical and known by the encoder and the decoder.

Once the image has been decomposed, the algorithms as described with reference to Figures 13 and 14 will process the blocks independently, in a sequential or parallel manner.

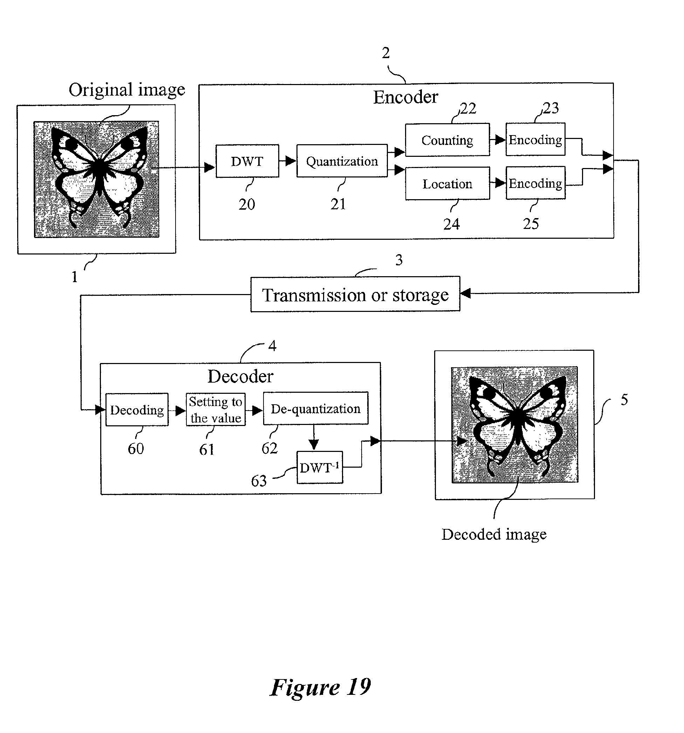

With reference to **Figure 19,** an embodiment of an encoding device 2 according to the invention is adapted to encode a digital signal with the object of compressing it. The encoding device is integrated into an apparatus, which is for example a digital camera, a digital camcorder, a scanner, a printer, a photocopier, a fax machine, a database management system, or a computer.

An image source 1 supplies a digital image to the encoding device 2, of which the operation will be detailed below.

The device according to the invention comprises:

- means 20 for decomposing the image into frequency sub-bands,
- means 21 for quantizing the coefficients of the frequency sub-bands, using a predetermined set of quantization symbols,
- means 22 for counting the number of coefficients associated with each of the quantization symbols,
- means 23 for encoding the number of coefficients associated with each of the quantization symbols,
- means 24 for determining the location of each of the coefficients associated with each of the quantization symbols, and
- means 25 for encoding the locations of the coefficients.

The encoding device supplies a file containing data representing the compressed image, to transmission means and/or memory storage means 3. These means are conventional and are not described here.

The means 3 are connected to a decoding device 4 according to the invention.

The decoding device comprises:

- means 60 for decoding the number of coefficients associated with each of the quantization symbols,
- means 60 for decoding the location of each of the coefficients associated with each of the quantization symbols,
- means 61 for setting each of the coefficients to the value of the quantization symbol which corresponds to it. Quantized frequency sub-bands are thus formed.

The decoding device 4 further comprises means 62 for dequantizing the quantized sub-bands. Finally, means 63 for synthesizing the frequency sub-bands supply a decoded image to a device 5 for exploitating the decoded image. The device 5 comprises for example a viewing screen for displaying the decoded image.

It should be noted that the encoding device and decoding device may be incorporated into the same apparatus, for example the computer 100 of Figure 9.

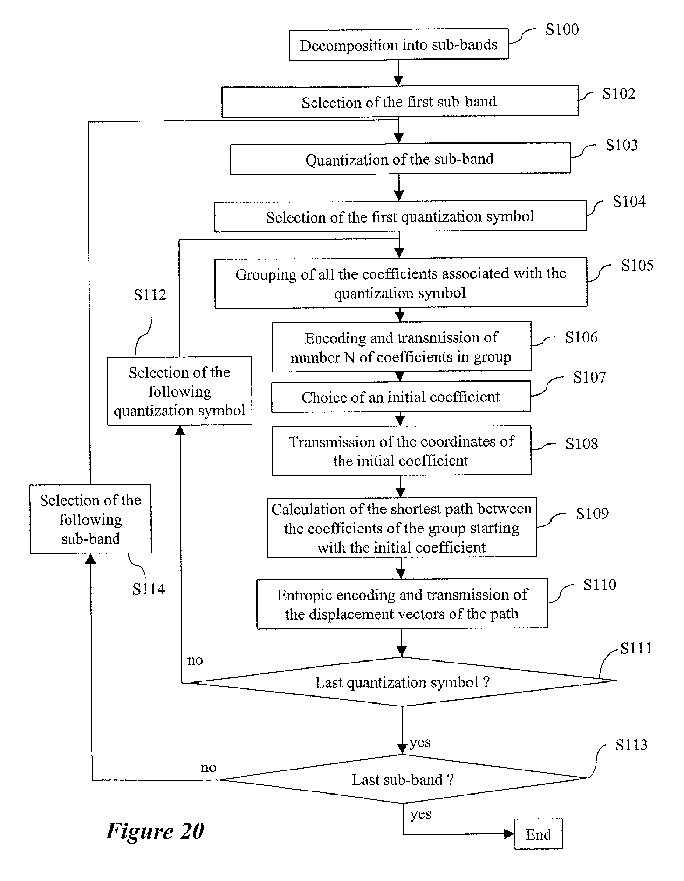

**Figure 20** shows an embodiment of a method of encoding an image, according to the invention. This method is implemented in the encoding device and comprises steps S100 to S114.

The method is carried out in the form of an algorithm which can be stored in whole or in part in any means of information storage capable of cooperating with the microprocessor. This storage means is readable by a computer or by a microprocessor. The storage means is integrated or not into the device, and may be removable. For example, it may comprise a magnetic tape, a diskette or a CD-ROM (fixed memory compact disk).

Step S100 is a decomposition into frequency sub-bands of a digital image IM to be processed according to the invention.

The signal is decomposed into frequency sub-bands at several resolution levels by a discrete wavelet transformation known as DWT (Discrete Wavelet Transform). Other types of decomposition can be used, for example Gauss-Laplace pyramids or discrete cosine transformations known as DCT. Hereinafter, we will consider more particularly the case of the transformation into discrete wavelets at M resolution levels.

A circuit for decomposition into frequency subbands, as well as an image processed by this circuit have been described with reference to Figures 15, 16a and 16b.

The following step S102 is the selection of a first sub-band resulting from the preceding decomposition. The sub-bands are considered one by one.

The following step S103 is a scalar quantization of the current sub-band. This is conventional and consists overall of transforming each real conflict value of the sub-band into a quantization symbol.

In a conventional manner, a predetermined quantization symbol set is used. A quantization symbol is associated with an interval of the set of real numbers and any coefficient belonging to this interval is quantized by this symbol.

For this, a quantization step size is chosen and each coefficient is divided by this quantization step size and the result is rounded to the nearest integer. This integer is the quantization symbol of the coefficient considered.

The result of step S103 is a quantized subband, containing a set of quantization symbols respectively associated with the coefficient of the current subband.

The following step S104 is the selection of a quantization symbol of the quantized sub-band.

The following step S105 is a grouping together of all the coefficients of the sub-band associated with the current quantization symbol.

At the following step S106, the number N of coefficients of the current group is determined. This number is encoded and transmitted or stored in memory.

The following step S107 is the selection of an initial coefficient in the group of coefficients of the sub-band associated with the current quantization symbol.

At the following step S108, the coordinates of the initial coefficient are transmitted or stored in memory. These coordinates form part of the encoding data of the current sub-band. For example, if the size of the current sub-band is 32 x 32 coefficients, a binary code of five bits is used to represent the x coordinate and a binary code of five bits is used to represent the y coordinate of the initial coefficient.

The following step S109 is the calculation of the shortest path for going through all the coefficients of the current group. This calculation is carried out according to a well-known technique of solving the "traveling salesman problem". Such techniques are for example described by R. E. Burkard et Al. in " Well-solvable special cases of the TSP : a survey ", SPEZIALFORSCHUNGSBEREICH F003, Bericht n°52, December 1995.

An example of solving this problem is also given at the Internet address http://itp.nat.uni-magdeburg.de/~mertens/TSP/node2.html.

This method is called "method by insertion" and relies on the principle idea of first constructing a path comprising a subset of the coefficients to be gone through.

For example, three coefficients are chosen at random and are connected.

Next, for each coefficient to be inserted in the path, calculation is made of which successive pairs of coefficients of the path it can be inserted so as to as to increase the length of the path the least possible. The cost of the coefficient under consideration is thus determined.

The coefficient of minimum cost is then inserted in the path.

This procedure is reiterated until all the coefficients have been inserted.

The path so obtained is of short length, without it necessarily being the shortest.

The result of step S109 is a set of displacement vectors corresponding to the path of minimum distance of the coefficients of the current group.

The following step S110 is an entropic encoding of the displacement vectors already determined. The encoding used here is for example a Huffman encoding or an arithmetic encoding. The encoded vectors are transmitted or stored in memory.

Thus, as a result of steps S106 to S110, the encoded form of a group of a sub-band comprises the number of coefficients of the group, the coordinates of the initial coefficient and the displacement vectors. As has been seen, the number of coefficients and the displacement vectors are encoded.

As a variant, steps S108 to S110 are modified in the following manner. The displacement vectors of the coefficients are not considered, but instead the coordinates of each of the coefficients. These coordinates are then encoded according to an entropic encoding then transmitted or stored in memory.

In this variant, the encoded form of a group of a sub-band comprises the number of coefficients of the group and the coordinates of all the coefficients of the group.

The following step S111 is a test to determine if all the quantization symbols used in the current subband have been considered.

If the response is negative, then step S111 is followed by the step S112 at which a following quantization symbol is considered. Step S112 is followed by the previously described step S105.

When all the symbols of the current sub-band have been processed, the response is positive at step S111 and this step is followed by step S113 which is a test to determine whether all the sub-bands have been processed.

When the response is negative, this step is followed by the step S114 at which a following sub-band is selected. Step S114 is followed by the previously described step S103.

When at step S113 the response is positive, this means that all the sub-bands have been processed and the encoding of the image is terminated.

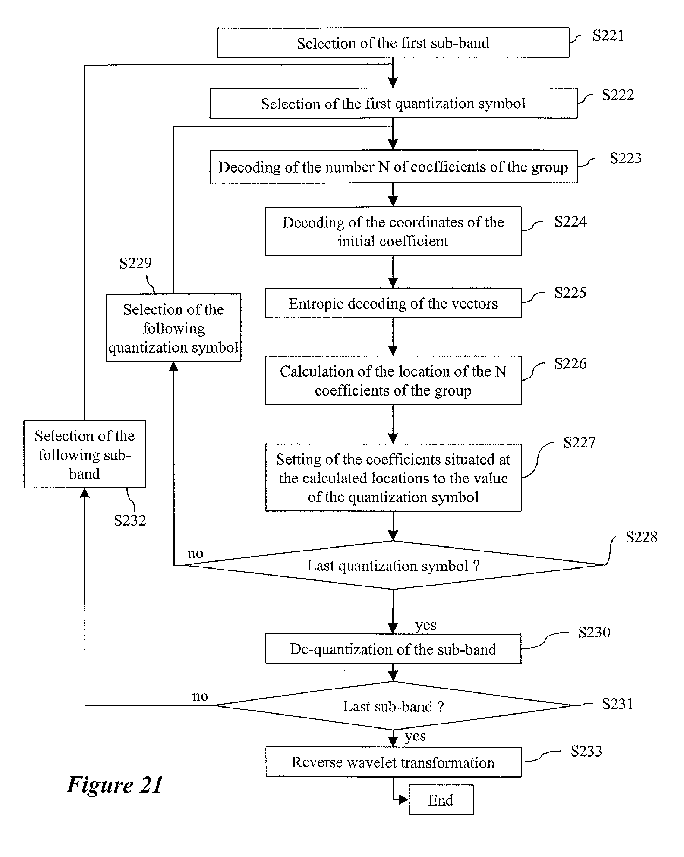

**Figure 21** represents an embodiment of a method of decoding data previously encoded according to the method of Figure 20.

This method is implemented in the decoding device and comprises the steps S221 to S233.

The method is carried out in the form of an algorithm which can be stored in whole or in part in any means of information storage capable of cooperating with the microprocessor. This storage means is readable by a computer or by a microprocessor. The storage means is integrated or not into the device, and may be removable. For example, it may comprise a magnetic tape, a diskette or a CD-ROM (fixed memory compact disk).

The data to be decoded are the encoded data of groups formed in the sub-bands of the initial image.

Step S221 is the selection of a first sub-band. The sub-bands are considered one by one.

The following step S222 is the selection of a quantization symbol. All the possible quantization symbols are considered successively.

The following step S223 is the decoding of the number N of coefficients of the current sub-band which belong to the group of the current quantization symbol. It should be recalled that this number forms part of the encoding data of the current group. The number N here makes it possible to know how many coefficients there are to decode.

In what follows, in order to simplify, it will be considered that the number N is not nil, i.e. that the possible quantization sub-bands which are considered actually correspond to a group of the current sub-band of the image.

The following step S224 is the reading of the coordinates of the initial coefficient of the current group.

The following step S225 is the entropic decoding of the displacement vectors of the current group of coefficients. The decoding corresponds to the encoding which was carried out at step S109.

The following step S226 is the calculation of the locations of the N coefficients of the current group. This calculation corresponds to step S108 already described. Based on the initial coefficient, the locations of the coefficients of the current group are determined.

As a variant, when all the locations of the coefficients are represented directly by their coordinates, then these coordinates are decoded, which determines the locations.

At the following step S227, the coefficients of the current group are set to the value of the quantization symbol corresponding to them.

The following step S228 is a test to determine whether the current quantization symbol is the last to be processed. If the response is negative, this step is followed by the step S229 at which a following quantization symbol is selected, so as to consider another group of coefficients. Step S229 is followed by the step S223 already described.

When the response is positive at step S228, this step is followed by step S230 at which the current sub-band is de-quantized.

The following step S231 is a test to determine whether the current sub-band is the last to be processed. If the response is negative, this step is followed by the step S232 at which a following sub-band is considered. Step S232 is followed by the step S222 already described.

When the response is positive at step S231, this step is followed by step S233 which is a reverse discrete wavelet transformation of the sub-bands of the image. The result is a decoded image.

**Claims**

1. Method of processing a digital signal including samples ($a_1$, $a_2$, ..., $a_9$) each represented by a coordinate on each axis of a reference frame with n dimensions, where n is the dimension of said digital signal, **characterized in that** it includes the following steps:

   - determining, amongst the coordinates of said samples, extreme coordinates (L, R, B, T) ,on the x and y axes respectively of the coordinate system.
   - for all possible combinations between said samples taken in pairs, determining a minimum distance amongst all the distances calculated along each axis between, on the one hand, the coordinate of a first sample and, on the other hand, the coordinate of each of the elements of the group comprising a second sample and copies of this second sample obtained by translation of said second sample in different directions and according to a value which depends on the extreme coordinates previously determined.

2. Method according to Claim 1, **characterized in that** it includes a step of determining a minimum path ($a_1$, $a_4$, $a_6$, $a_7$, $a_8$, $a_5$, $a_2$, $a_3$, $a_9$) between the samples from the different minimum distances previously determined along each axis and for all the possible combinations of pairs of samples.

3. Method according to Claim 2, **characterized in that** the minimum path between the samples is determined using one of the solutions to the traveling salesman mathematical problem.

4. Method according to one of Claims 1 to 3, **characterized in that** the value which depends on the extreme coordinates corresponds substantially to the difference (L-R, R-L, B-T, T-B) between the maximum coordinate (L, B) and the minimum coordinate (R, T) of the samples on each axis.

5. Method according to one of Claims 1 to 4, **characterized in that** the copies of the second sample are made in both possible directions of each axis and each diagonal.

6. Method according to one of Claims 1 to 5, **characterized in that** it includes a step of encoding the extreme coordinates (L, R, B, T) of the samples.

7. Method according to Claim 6, **characterized in that** it includes a step of transmitting the encoded extreme coordinates (L, R, B, T) of the samples.

8. Method according to Claim 2, **characterized in that** it includes a step of encoding the displacement vectors (W) obtained from the consecutive samples of the minimum path.

9. Method according to Claim 8, **characterized in that**, for a signal of dimension 2, the coordinates wx, wy of a displacement vector W are supplied by the following formulae:

$$wx = \min (|x_2 - x_1|, |x_2 + L - R - x_1|, |x_2 - L + R - x_1|),$$

$$wy = \min (|y_2 - y_1|, |y_2 + B - T - y_1|, |y_2 - B + T - y_1|),$$

where $x_1$, $y_1$ and $x_2$, $y_2$ are respectively the coordinates of two successive samples of a path.

10. Method according to Claim 8 or 9, **characterized in that** it includes a step of transmitting the encoded displacement vectors (W) and the order of these vectors in the path between the samples.

11. Method according to one of Claims 1 to 10, **characterized in that** the digital signal is an image signal.

12. Method of processing an encoded digital signal including a step of receiving this encoded digital signal, **characterized in that** said encoded digital signal includes, in encoded form:

- a coordinate of a so-called initial one of the samples of said non-encoded signal which was obtained along each axis of a coordinate system with n dimensions, where n is the dimension of said signal,
- the extreme coordinates (L, R, B, T) on each axis of the samples of said non-encoded signal,
- displacement vectors (W) which have each been obtained before coding of said signal from consecutive samples of a minimum path determined between the samples of the signal, as well as the order of these vectors in the path.

13. Method according to Claim 12, **characterized in that** it includes the following steps of decoding:

- the coordinate of the initial sample,
- the extreme coordinates of the samples,
- the displacement vectors (W).

14. Method according to Claim 13, **characterized in that** it includes a step of reconstitution of the coordinates of each of the samples of the path, along each axis, according to the displacement vectors (W), the extreme coordinates of the samples and the coordinate of the initial sample.

15. Method according to Claim 13 or 14, **characterized in that** it includes, after decoding, a step of producing a list of the displacement vectors (W) according to the order of these vectors in the path.

16. Method according to Claim 14, **characterized in that** it includes a step of determining the position of the reconstituted coordinates along each axis of each of the samples of the path with respect to the extreme coordinates of the samples.

17. Method according to Claim 16, **characterized in that**, when the determination step reveals that the position of a coordinate of a sample along an axis is situated beyond the extreme coordinates on said axis, said method includes a step of adjusting the position of said coordinate.

18. Method according to Claim 17, **characterized in that** the adjustment step consists of carrying out a translation of the position of the coordinate along the axis in question and according to a value which depends on the extreme coordinates on said axis and the position of the coordinate with respect to said extreme coordinates.

19. Method according to Claim 18, **characterized in that** the value which depends on the extreme coordinates on the axis corresponds substantially to the difference (L-R, R-L, B-T, T-B) between the maximum coordinate (L, B) and the minimum coordinate (R, T) of samples on the axis in question.

20. Method according to one of Claims 17 to 19, **char-**

**acterized in that**, for a signal of dimension 2, the step of adjusting the position of the coordinates $x_2$ and $y_2$ obtained from the coordinates $x_1$ and $y_1$ of the previous sample on the path is given by the following formulae:

$$\text{If } x_1 + wx < L, x_2 = x_1 + wx + R - L$$

$$\text{If } x_1 + wx > R, x_2 = x_1 + wx - R + L,$$

$$\text{If } y_1 + wy > T, y_2 = y_1 + wy + B - T,$$

$$\text{If } y_1 + wy < B, y_2 = y_1 + wy - B + T,$$

where wx and wy are the coordinates of the displacement vector W in question.

21. Device for processing a digital signal including samples $(a_1, a_2, ..., a_9)$ each represented by a coordinate on each axis of a coordinate system with n dimensions, where n is the dimension of said digital signal, **characterized in that** it includes:

- means of determining, amongst the coordinates of said samples, extreme coordinates (L, R, B, T) on the x and y axes respectively of the coordinate system.
- for all possible combinations between said samples taken in pairs, means of determining a minimum distance amongst all the distances calculated along each axis between, on the one hand, the coordinate of a first sample and, on the other hand, the coordinate of each of the elements of the group comprising a second sample and copies of this second sample obtained by translation of said second sample in different directions and according to a value which depends on the extreme coordinates previously determined.

22. Device according to Claim 21, **characterized in that** it has means of determining a minimum path $(a_1, a_4, a_6, a_7, a_8, a_5, a_2, a_3, a_9)$ between the samples from the different minimum distances previously determined along each axis and for all possible combinations of pairs of samples.

23. Device according to Claim 22, **characterized in that** the means of determining a minimum path between the samples use one of the solutions to the traveling salesman mathematical problem.

24. Device according to one of Claims 21 to 23, **characterized in that** the value which depends on the extreme coordinates corresponds substantially to the difference (L-R, R-L, B-T, T-B) between the maximum coordinate (L, B) and the minimum coordinate (R, T) of the samples on each axis.

25. Device according to one of Claims 21 to 24, **characterized in that** it includes means of encoding the extreme coordinates (L, R), (B, T) of the samples.

26. Device according to Claim 25, **characterized in that** it includes means of transmitting the extreme coordinates (L, R), (B, T) of the encoded samples.

27. Device according to Claim 22, **characterized in that** it has means of encoding the displacement vectors (W) obtained from the consecutive samples of the minimum path.

28. Device according to Claim 27, **characterized in that** it has means of transmitting the encoded displacement vectors (W) and the order of these vectors in the path between the samples.

29. Device according to one of Claims 21 to 28, **characterized in that** the digital signal is an image signal.

30. Device for processing an encoded digital signal having means of receiving this coded digital signal, **characterized in that** the encoded digital signal includes, in encoded form:

- a coordinate of a so-called initial one of the samples of said non-encoded signal which was obtained along each axis of a coordinates system with n dimensions, where n is the dimension of said signal,
- the extreme coordinates (L, R, B, T) on each axis of the samples of said non-encoded signal,
- displacement vectors (W) which have each been obtained before encoding of said signal from the consecutive samples of a minimum path determined between the samples of the signal, as well as the order of these vectors in the path.

31. Device according to Claim 30, **characterized in that** it includes means of decoding:

- the coordinate of the initial sample,
- the extreme coordinates of the samples,
- the displacement vectors (W).

32. Device according to Claim 31, **characterized in that** it includes a means of reconstitution of the coordinates of each of the samples of the path, along each axis, according to the displacement vectors (W), the extreme coordinates of the samples and the coordinate of the initial sample.

**33.** Device according to Claim 31 or 32, **characterized in that** it has means of producing a list of the displacement vectors (W) according to the order of these vectors in the path.

**34.** Device according to Claim 32, **characterized in that** it has means of determining the position of the reconstituted coordinates along each axis of each of the samples of the path with respect to the extreme coordinates of the samples.

**35.** Device according to Claim 34, **characterized in that** it has means of adjusting the position of a co-ordinate of a sample along an axis which are used when the determination means reveal that the position of the said coordinate is situated beyond the extreme coordinates on said axis.

**36.** Device according to Claim 35, **characterized in that** the adjustment means perform a translation of the position of the coordinate along the axis in question and according to a value which depends on the extreme coordinates on the said axis and the position of the coordinate with respect to the said extreme coordinates.

**37.** Device according to Claim 36, **characterized in that** the value which depends on the extreme coordinates on the axis corresponds substantially to the difference (L-R, R-L, B-T, T-B) between the maximum coordinate (L, B) and the minimum coordinate (R, T) of the samples on the axis in question.

**38.** Data processing apparatus, **characterized in that** it includes a digital signal processing device according to one of Claims 21 to 29.

**39.** Data processing apparatus, **characterized in that** it has a device for processing an encoded digital signal according to one of Claims 30 to 37.

**40.** Information storage means which can be read by a computer or a microprocessor containing code instructions of a computer program for executing the steps of the digital signal processing method according to one of Claims 1 to 11.

**41.** Information storage means which can be read by a computer or a microprocessor containing code instructions of a computer program for executing the steps of the method of processing an encoded digital signal according to one of Claims 12 to 20.

**42.** Partially or totally removable information storage means which can be read by a computer or a microprocessor containing code instructions of a computer program for executing the steps of the method of processing a digital signal according to one of Claims 1 to 11.

**43.** Partially or totally removable information storage means which can be read by a computer or a microprocessor containing code instructions of a computer program for executing the steps of the method of processing an encoded digital signal according to one of Claims 12 to 20.

**44.** Computer program which can be loaded into a programmable apparatus, **characterized in that** it contains sequences of instructions or portions of software code for implementing the steps of the method of processing a digital signal according to one of Claims 1 to 11, when this computer program is loaded and executed by the programmable apparatus.

**45.** Computer program which can be loaded into a programmable apparatus, **characterized in that** it contains sequences of instructions or portions of software code for implementing the steps of the method of processing an encoded digital signal according to one of Claims 12 to 20, when this computer program is loaded and executed by the programmable apparatus.

**46.** Method of encoding a digital signal composed of a set of samples, with each sample there being associated an amplitude and at least one coordinate in a coordinate system, the method being **characterized in that** it comprises the steps of:

- classifying at least some of the samples according to a predetermined criterion,
- obtaining a curve representing the variation in the samples classified according to the predetermined criterion,
- encoding the data representing the curve obtained,
- encoding information representing at least one coordinate of at least one coefficient in an order obtained from the classification.

**47.** Method according to Claim 46, **characterized in that** the digital signal consists of at least one digital image.

**48.** Method according to Claim 47, **characterized in that** the digital image is first divided into sub-parts.

**49.** Method according to Claim 48, **characterized in that** the division into sub-parts is carried out according to a decomposition into sub-bands.

**50.** Method according to Claim 49, **characterized in**

**that** the sub-parts are the detail sub-bands, the sub-bands being divided into blocks of predetermined size and the classification of at least some of the samples being carried out from among the samples of each block.

51. Method according to one of Claims 46 to 50, **characterized in that** the predetermined criterion is the amplitude of the samples.

52. Method according to Claim 51, **characterized in that** the method further comprises an encoding of the sign of the amplitude of the coefficients, and the predetermined criterion is the absolute value of the amplitude of the samples.

53. Method according to Claim 52, **characterized in that** only the samples whose amplitude is greater than a predetermined threshold will be classified.

54. Method according to any one of Claims 46 to 53, **characterized in that** the curve representing the variation according to the predetermined criterion of the samples classified is chosen from among a predetermined family.

55. Method according to Claim 54, **characterized in that** the predetermined family is the family of decreasing exponentials, the choice of the curve among the family of exponentials being made according to the minimization of the root mean square error.

56. Method according to any one of Claims 46 to 55, **characterized in that** the information representing at least one coordinate of at least one coefficient are the coordinates of the coefficients in the image.

57. Method according to one of Claims 46 to 56, **characterized in that** the information representing at least one coordinate of at least one coefficient are the vectors of displacement between two coefficients which are close according to the classification.

58. Method according to Claim 57, **characterized in that** the displacement vectors are encoded according to a Huffman code, constraints of rate of the encoded signal and/or of distortion of the decoded digital signal being taken into account in determining a travel path of the samples.

59. Method of transmitting a digital signal which has been encoded according to an encoding method according to Claims 46 to 58, **characterized in that** the encoded data representing the curve obtained and the encoded information representing at least one coordinate are transmitted via a network.

60. Method of decoding a digital signal comprising coefficients, the method being **characterized in that** it comprises the steps of:

- decoding information representing a curve of variation of the amplitude of the classified coefficients,
- decoding information representing at least one coordinate of the coefficients in a predetermined order and associating with the coefficients an amplitude obtained from the information representing the decoded curve and the order of the coefficients.

61. Method according to Claim 60, **characterized in that** the digital signal is constituted by at least one digital image.

62. Method according to Claim 61, **characterized in that** it further comprises a step of transformation that is inverse to decomposition into sub-bands of the image.

63. Method according to Claim 62, **characterized in that** the sub-parts are the detail sub-bands, the detail sub-bands being divided into blocks of predetermined size and the decoding taking place block by block.

64. Method according to any one of Claims 60 to 63, **characterized in that** the information representing at least one coordinate of at least one coefficient are the spatial coordinates of coefficients in the image.

65. Method according to one of Claims 60 to 63, **characterized in that** the information representing at least one coordinate of at least one coefficient are the vectors of displacement between two coefficients which are close according to the classification.

66. Method according to Claim 60, **characterized in that** it further comprises a step of decoding of the sign of the amplitude of the coefficients and **in that** the curve of variation is a curve of variation of the absolute value of the amplitude of the coefficients classified.

67. Device for encoding a digital signal composed of a set of samples, with each sample there being associated an amplitude and at least one coordinate in a coordinate system the device being **characterized in that** it comprises:

- means of classifying at least some of the samples according to a predetermined criterion,
- means of obtaining a curve representing the variation according to the predetermined criterion in the samples classified,

- means of encoding data representing the curve obtained,
- means of encoding information representing at least one coordinate of at least one coefficient in an order obtained from the classification.

**68.** Device according to Claim 67, **characterized in that** the digital signal is constituted by at least one digital image.

**69.** Device according to Claim 68, **characterized in that** it further comprises means of dividing the image into sub-parts.

**70.** Device according to Claim 69, **characterized in that** the means of dividing the image are means of decomposition into sub-bands.

**71.** Device according to Claim 70, **characterized in that** the sub-parts are the detail sub-bands, the sub-bands being divided into blocks of predetermined size and the classification of at least some of the samples being carried out among the samples of each block.

**72.** Device according to one of Claims 67 to 71, **characterized in that** the predetermined criterion is the amplitude of the samples.

**73.** Device according to Claim 72, **characterized in that** the method further comprises an encoding of the sign of the amplitude of the coefficients, and the predetermined criterion is the absolute value of the amplitude of the samples.

**74.** Device according to Claim 72, **characterized in that** only the samples whose amplitude is greater than a predetermined threshold will be classified.

**75.** Device according to any one of Claims 72 to 74, **characterized in that** the curve representing the variation according to the predetermined criterion of the samples classified is chosen from among a predetermined family.

**76.** Device according to Claim 67, **characterized in that** the predetermined family is the family of decreasing exponentials, the choice of the curve among the family of exponentials being carried out by means of selections as a function of criteria of minimization of the root mean square error.

**77.** Device according to any one of Claims 67 to 76, **characterized in that** the information representing at least one coordinate of at least one coefficient are the coordinates of the coefficients in the image.

**78.** Device according to one of Claims 67 to 77, **characterized in that** the information representing at least one coordinate of at least one coefficient are the vectors of displacement between two coefficients which are close according to the classification.

**79.** Device according to Claim 76, **characterized in that** the displacement vectors are encoded according to a Huffman code, a travel path of the samples being determined taking into account constraints of rate of the encoded signal and/or of distortion of the decoded digital signal.

**80.** Device for transmitting a digital signal which has been encoded according to an encoding method according to Claims 67 to 79,
**characterized in that** the encoded data representing the curve obtained and the encoded information representing at least one coordinate are transmitted via a network.

**81.** Device for decoding a digital signal comprising coefficients, the device being **characterized in that** it comprises:

- means of decoding information representing a curve of variation of the amplitude of the coefficients classified,
- means of decoding information representing at least one coordinate of the coefficients in a predetermined order and of associating with the coefficients an amplitude obtained from information representing the decoded curve and the order of the coefficients.

**82.** Device according to Claim 81, **characterized in that** the digital signal is constituted by at least one digital image.

**83.** Device according to Claim 82, **characterized in that** it further comprises means of transformation that is inverse to decomposition into sub-bands of the image.

**84.** Device according to Claim 83, **characterized in that** the sub-parts are the detail sub-bands, the detail sub-bands being divided into blocks of predetermined size and the decoding takes place block by block.

**85.** Device according to any one of Claims 82 to 84, **characterized in that** the information representing at least one coordinate of at least one coefficient are the spatial coordinates of coefficients in the image.

**86.** Device according to one of Claims 81 to 84, **char-**

acterized in that the information representing at least one coordinate of at least one coefficient are the vectors of displacement between two coefficients which are close according to the classification.

87. Device according to Claim 81, **characterized in that** it further comprises means for decoding the sign of the amplitude of the coefficients and **in that** it is adapted to consider a curve of variation which is a curve of variation of the absolute value of the amplitude of the coefficients classified.

88. Storage medium storing a program for implementing the method according to any one of Claims 46 to 66.

89. Storage medium according to claim 88, **characterised in that** said storage medium is detachably mountable on a device according to any one of Claims 67 to 87.

90. Storage medium according to claim 88 or 89, **characterised in that** said storage medium is a floppy disk or a CD-ROM.

91. Computer program on a storage medium and comprising computer executable instructions for causing a computer to encode a digital signal according to any one of claims 46 to 58.

92. Computer program on a storage medium and comprising computer executable instructions for causing a computer to transmit a digital signal according to claim 59.

93. Computer program on a storage medium and comprising computer executable instructions for causing a computer to decode a digital signal according to any one of claims 60 to 66.

94. A method of encoding a set of data representing physical quantities, the set of data comprising coefficients,
    **characterized in that** it comprises the steps of:

    - quantizing (S103) the coefficients using a predetermined set of quantization symbols,
    - counting (S106) the number of coefficients associated with each of the quantization symbols,
    - encoding (S106) the number of coefficients associated with each of the quantization symbols,
    - determining (S108, S109) the location of each of the coefficients associated with each of the quantization symbols, and
    - encoding (S110) the locations of the coefficients.

95. A method of encoding according to Claim 94, **characterized in that** the locations of the coefficients are determined by:

    - the coordinates of an initial coefficient (S108) in the set of data,
    - displacement vectors (S109) for the other coefficients, the displacement vector of a coefficient being calculated from another coefficient associated with the same symbol.

96. A method of encoding according to Claim 95, **characterized in that** the encoding of the locations of the coefficients comprises (S110) an entropic encoding of the displacement vectors.

97. A method of encoding according to Claim 94, **characterized in that** the locations of the coefficients are represented by their coordinates in the set of data.

98. A method of encoding according to Claim 97, **characterized in that** the encoding of the locations of the coefficients comprises an entropic encoding of the coordinates of the coefficients.

99. A method of encoding according to any one of Claims 94 to 98, **characterized in that** the set of data is a frequency sub-band signal resulting from a decomposition (S101) into sub-bands of an initial signal.

100. A method of decoding a set of data representing physical quantities encoded by the method according to any one of Claims 94 to 99,
    **characterized in that** it comprises the steps of:

    - decoding (S223) the number of coefficients associated with each of the quantization symbols,
    - decoding (S224, S225, S226) the location of each of the coefficients associated with each of the quantization symbols,
    - setting (S227) each of the coefficients to the value of the quantization symbol which corresponds to it.

101. A method of decoding according to Claim 100, **characterized in that** the decoding of the location of a coefficient comprises (S225) the decoding of the displacement vector corresponding to it.

102. A method of decoding according to Claim 100, **characterized in that** the decoding of the location of a coefficient comprises the decoding of its coordinates.

103. A device for encoding a set of data representing physical quantities, the set of data comprising coefficients,

**characterized in that** it comprises:

- means (21) for quantizing the coefficients using a predetermined set of quantization symbols,
- means (22) for counting the number of coefficients associated with each of the quantization symbols,
- means (23) for encoding the number of coefficients associated with each of the quantization symbols,
- means (24) for determining the location of each of the coefficients associated with each of the quantization symbols, and
- means (25) for encoding the locations of the coefficients.

**104.** An encoding device according to Claim 103, **characterized in that** the means (24) for determining the locations of the coefficients are adapted to determine them by:

- the coordinates of an initial coefficient in the set of data,
- displacement vectors for the other coefficients, the displacement vector of a coefficient being calculated from another coefficient associated with the same symbol.

**105.** An encoding device according to Claim 104, **characterized in that** the means (25) for encoding the locations of the coefficients are adapted to perform an entropic encoding of the displacement vectors.

**106.** An encoding device according to Claim 103, **characterized in that** the means (24) for determining the locations of the coefficients are adapted to determine them by their coordinates in the set of data.

**107.** An encoding device according to Claim 106, **characterized in that** the means (25) for encoding the locations of the coefficients are adapted to perform an entropic encoding of the coordinates of the coefficients.

**108.** An encoding device according to any one of Claims 103 to 107, **characterized in that** it is adapted to process a set of data which is a frequency sub-band signal resulting from a decomposition (20) into sub-bands of an initial signal.

**109.** A device for decoding a set of data representing physical quantities encoded by the device according to any one of Claims 103 to 108, **characterized in that** it comprises:

- means (60) for decoding the number of coefficients associated with each of the quantization symbols,
- means (60) for decoding the location of each of the coefficients associated with each of the quantization symbols,
- means (61) for setting each of the coefficients to the value of the quantization symbol which corresponds to it.

**110.** A decoding device according to Claim 109, **characterized in that** the means (60) for decoding the location of a coefficient are adapted to perform the decoding of the displacement vector corresponding to it.

**111.** A decoding device according to Claim 109, **characterized in that** the means (60) for decoding the location of a coefficient are adapted to perform the decoding of its coordinates.

**112.** An encoding device according to any one of claims 103 to 108, **characterized in that** the means for quantization, counting, determination and encoding are incorporated in:

- a microprocessor (103),
- a read only memory (104), comprising a program for processing the data, and
- a random access memory (106) comprising registers adapted to record variables modified during the execution of said program.

**113.** A decoding device according to any one of claims 109 to 111, **characterized in that** the means for decoding and setting to the value are incorporated in:

- a microprocessor (103),
- a read only memory (104), comprising a program for processing the data, and
- a random access memory (106) comprising registers adapted to record variables modified during the execution of said program.

**114.** A device for processing (100) a digital image, **characterized in that** it comprises means adapted to implement the method according to any one of Claims 94 to 102.

**115.** A device for processing (100) a digital image, **characterized in that** it comprises the device according to any one of Claims 103 to 113.

**116.** Storage medium storing a program for implementing the method according to any one of Claims 94 to 102.

**117.** Storage medium according to claim 116, **characterised in that** said storage medium is detachably mountable on a device according to any one of Claims 67 to 87.

**118.** Storage medium according to claim 116 or 117, **characterised in that** said storage medium is a floppy disk or a CD-ROM.

**119.** Computer program on a storage medium and comprising computer executable instructions for causing a computer to encode a set of data according to any one of claims 94 to 99.

**120.** Computer program on a storage medium and comprising computer executable instructions for causing a computer to decode a set of data according to any one of claims 100 to 102.

*Figure 1*

EP 1 263 236 A2

a9

a8
a7
a6
a5
a4
a3
a1
a2

30 IM

| Determination of extremes | 32 |

| Determination of vectors W | 34 |

| Determination of minimum route over the vectors W | 36 |

| Coder | 38 |

| Transmission or storage | 40 |

| Decoder | 42 |

| Production of the list of vectors W | 44 |

| Reconstruction of coordinates | 46 |

48
a9

a8
a7
a6
a5
a4
a3
a1
a2

*Figure 2*

*Figure 3*

*Figure 4*

EP 1 263 236 A2

*Figure 5*

EP 1 263 236 A2

Figure 6

*Figure 7*

EP 1 263 236 A2

*Figure 8*

ROM ~ 102

~ 10

CPU ~ 100

RAM ~ 103

Screen ~ 104

Keyboard ~ 114

Hard Disk ~ 108

Floppy Drive ~ 109

113

Communication Interface

Network

~ 112

Microphone

~ 111

~ 101

Diskette ~ 110

Digital moving-picture camera ~ 107

*Figure 9*

Acquisition of samples whose location is to be coded — E1

Calculation of extreme coordinates L, R, B, T and coding — E2

Transmission of extreme coordinates L, R, B, T — E3

Choice of an initial location and coding — E4

Transmission of the coordinates of the initial sample — E5

Determination of the short vectors — E6

Calculation of the shortest path between the samples using the vectors of ype $W_i$ — E7

Construction, from the initial sample chosen, of the list of vectors of type $W_i$ — E8

Entropic coding of the vectors — E9

Transmission of the vectors — E10

End

*Figure 10*

E20

Reception

E21

Decoding of extreme coordinates L,R,B,T

E22

Decoding of coordinates of initial sample

E23

Entropic deconding of the vectors $W_i$

E24

Construction of the list of vectors $W_i$

i=1 — E25

Calculation of the coordinates $x_2,y_2$ of the following sample/ Wi, previous sample — E26

E27 $x_2$/L,R ? — no

yes

Ajustment — E28

E29 $y_2$/B,T? — no

yes

Ajustment — E30

i=i+1 — E32

no — i=N? — E31

yes

Reconstitution of the set G — E33

End

*Figure 11*

50

IM

Classification 51

Encoder 52

Compressed file — CF

Transmission or storage 53

CF Compressed file

Decoder 54

40

IM'

Decoded image

*Figure 12*

```
                          ┌─────────────────────────┐
                          │ Transformation of signal │──╮ 301
                          └─────────────────────────┘
                                      │
                          ┌─────────────────────────┐
                          │   Division into blocks   │──╮ 305
                          └─────────────────────────┘
                                      │
                          ┌─────────────────────────┐
                          │    Selection of a block  │──╮ 310
                          └─────────────────────────┘
                                      │
   ┌──────────────────┐   ┌───────────────────────────────────────┐
   │ Following block   │──╮ 355   │ Calculation of approximation by a function │──╮ 315
   └──────────────────┘   └───────────────────────────────────────┘
                                      │
                          ┌───────────────────────────────────────┐
                          │ Transmission of parameters of the function │──╮ 320
                          └───────────────────────────────────────┘
                                      │
                   ┌───────────────────────────────────────────────┐
                   │ Calculation of the path minimizing the encoding cost │──╮ 325
                   └───────────────────────────────────────────────┘
                                      │
                          ┌─────────────────────────────┐
                          │ Encoding of the location of the first │──╮ 330
                          │    coefficient in the path        │
                          └─────────────────────────────┘
                                      │
                          ┌─────────────────────────────┐
              345         │ Encoding of the movement vector │──╮ 335
   ┌─────────────────────┐│   to the following coefficient  │
   │ Following coefficient││└─────────────────────────────┘
   └─────────────────────┘          │
                              ◇ Penultimate coefficient? ◇── 340
                         No ──┘      │ Yes
                                     │
                              ◇  Last block?  ◇── 350
                         No ──┘      │ Yes
                                     │
                                 ┌──────┐
                                 │ End  │
                                 └──────┘
```

**Figure 13**

First block ⟋ 401

405 ⟋ Reading of parameters of approximation function

410 ⟋ Reading of coordinates of first sample

440 ⟋

Following block

Reading of movement value ⟋ 415

Next coefficient ⟋ 430

420 ⟋ Allocate to the coefficient of coordinates given
by the movement vector the value given
by the approximation function

No ⟵ Last coefficient?? ⟋ 425

Yes

No ⟵ Last block? ⟋ 435

Yes

*Figure 14*

Reverse transform ⟋ 445

End

*Figure 15*

EP 1 263 236 A2

EP 1 263 236 A2

*Figure 16b*

*Figure 16a*

EP 1 263 236 A2

LL₃  LH₃  LH₂  LH₁

*Figure 17*

EP 1 263 236 A2

*Figure 18*

45

*Figure 19*

Decomposition into sub-bands — S100

Selection of the first sub-band — S102

Quantization of the sub-band — S103

Selection of the first quantization symbol — S104

Grouping of all the coefficients associated with the quantization symbol — S105

Encoding and transmission of number N of coefficients in group — S106

Choice of an initial coefficient — S107

Transmission of the coordinates of the initial coefficient — S108

Calculation of the shortest path between the coefficients of the group starting with the initial coefficient — S109

Entropic encoding and transmission of the displacement vectors of the path — S110

Last quantization symbol ? — S111

no

Selection of the following quantization symbol — S112

yes

Last sub-band ? — S113

no

Selection of the following sub-band — S114

yes

End

*Figure 20*

Selection of the first sub-band — S221

Selection of the first quantization symbol — S222

Decoding of the number N of coefficients of the group — S223

Decoding of the coordinates of the initial coefficient — S224

Entropic decoding of the vectors — S225

Calculation of the location of the N coefficients of the group — S226

Setting of the coefficients situated at the calculated locations to the value of the quantization symbol — S227

S229 Selection of the following quantization symbol

S232 Selection of the following sub-band

no — Last quantization symbol ? — S228

yes

De-quantization of the sub-band — S230

no — Last sub-band ? — S231

yes

Reverse wavelet transformation — S233

End

*Figure 21*